# EUROPÄISCHE PATENTSCHRIFT

(11) **EP 3 375 736 B1**
(45) Veröffentlichungstag und Bekanntmachung des Hinweises auf die Patenterteilung: **18.12.2024**
(21) Anmeldenummer: 18159194.2
(22) Anmeldetag: 28.02.2018
(51) Int. Cl.: B65G 17/24, B65G 47/26, B65G 47/28

(54) **TRANSPORTVORRICHTUNG ZU EINEM TRANSPORT VON ZUMINDEST EINEM PRODUKT, INSBESONDERE ZU EINER BILDUNG VON REIHEN UND/ODER GRUPPEN AUS PRODUKTEN**
TRANSPORT DEVICE FOR TRANSPORTING AT LEAST ONE PRODUCT, IN PARTICULAR FOR FORMING SERIES AND/OR GROUPS OF PRODUCTS
DISPOSITIF DE TRANSPORT POUR UN TRANSPORT D'AU MOINS UN PRODUIT, EN PARTICULIER POUR LA FORMATION DE SÉRIES ET/OU DE GROUPES DE PRODUITS

(30) Priorität: 13.03.2017 DE 102017204051
(43) Veröffentlichungstag der Anmeldung: 19.09.2018
(73) Patentinhaber: Syntegon Packaging Systems AG, 8222 Beringen (CH)
(72) Erfinder: Wipf, Alfred, 79798 Jestetten (DE); Kathan, Philipp, 8200 Schaffhausen (CH)
(74) Vertreter: Novagraaf Group

(56) Entgegenhaltungen:
- WO-A1-2014/066607
- FR-A1- 2 055 725
- JP-U- S5 746 513
- US-A- 3 894 627
- US-A1- 2015 068 866
- US-A1- 2016 251 169

## Beschreibung

### Stand der Technik

Aus US 7,311,192 B2 ist bereits eine Transportvorrichtung zu einem Transport von zumindest einem Produkt bekannt, die zumindest eine Führungseinheit und zumindest eine Fördereinheit umfasst, die zumindest eine relativ zur Führungseinheit beweglich gelagerte Stetigförderereinheit aufweist, die zumindest ein beweglich gelagertes Förderelement und zumindest ein weiteres beweglich gelagertes Förderelement umfasst, die zur Bildung der Stetigförderereinheit miteinander verbunden sind und zumindest gemeinsam relativ zur Führungseinheit bewegbar sind. Ferner umfasst die bekannte Transportvorrichtung zumindest eine Förderantriebseinheit zu einem Antrieb der Stetigförderereinheit relativ zur Führungseinheit, insbesondere zu einem umlaufenden Antrieb der Stetigförderereinheit um die Führungseinheit.

Ferner ist aus WO 2014/066607 A1 bereits eine Transportvorrichtung zu einem Transport von Produkten zu einer Bildung von Reihen und/oder Gruppen aus den Produkten bekannt. Diese Transportvorrichtung umfasst eine Führungseinheit und eine Fördereinheit, die eine relativ zur Führungseinheit beweglich gelagerte Stetigförderereinheit aufweist, die als ein endloses Förderrollentransportband ausgebildet ist, wobei die Stetigförderereinheit zumindest ein als Förderrolle ausgebildetes, beweglich gelagertes Förderelement und zumindest ein weiteres als weitere Förderrolle ausgebildetes, beweglich gelagertes Förderelement umfasst, die zur Bildung der Stetigförderereinheit miteinander verbunden sind und zumindest gemeinsam relativ zur Führungseinheit bewegbar sind. Des Weiteren umfasst die Transportvorrichtung eine Förderantriebseinheit zu einem Antrieb der Stetigförderereinheit relativ zur Führungseinheit zu einem umlaufenden Antrieb der Stetigförderereinheit um die Führungseinheit und eine Individualantriebseinheit, die dazu vorgesehen ist, zumindest das zumindest eine Förderelement und/oder das zumindest eine weitere Förderelement zusätzlich zu einem Antrieb der Stetigförderereinheit relativ zur Führungseinheit individuell anzutreiben, wobei das zumindest eine Förderelement einer Fördergruppe der Stetigförderereinheit zugeordnet ist und das zumindest eine weitere Förderelement einer weiteren Fördergruppe der Stetigförderereinheit zugeordnet ist, wobei die Individualantriebseinheit dazu vorgesehen ist, die Fördergruppe und/oder die weitere Fördergruppe individuell anzutreiben, wobei die Individualantriebseinheit zumindest ein Form- und/oder Kraftschlussantriebselement aufweist, das zu einem Antrieb des zumindest einen Förderelements und/oder des zumindest einen weiteren Förderelements mit dem zumindest einen Förderelement und/oder mit dem zumindest einen weiteren Förderelement zusammenwirkt.

### Offenbarung der Erfindung

Die Erfindung geht aus von einer Transportvorrichtung zu einem Transport von Produkten zu einer Bildung von Reihen und/oder Gruppen aus Produkten, mit zumindest einer Führungseinheit, mit zumindest einer Fördereinheit, die zumindest eine relativ zur Führungseinheit beweglich gelagerte Stetigförderereinheit, die als ein endloses Förderrollentransportband ausgebildet ist, aufweist, wobei die Stetigförderereinheit zumindest ein als Förderrolle ausgebildetes, beweglich gelagertes Förderelement und zumindest ein weiteres als weitere Förderrolle ausgebildetes, beweglich gelagertes Förderelement umfasst, die zur Bildung der Stetigförderereinheit miteinander verbunden sind und zumindest gemeinsam relativ zur Führungseinheit bewegbar sind, mit zumindest einer Förderantriebseinheit zu einem Antrieb der Stetigförderereinheit relativ zur Führungseinheit zu einem umlaufenden Antrieb der Stetigförderereinheit um die Führungseinheit und mit zumindest einer Individualantriebseinheit, die zumindest dazu vorgesehen ist, zumindest das zumindest eine Förderelement und/oder das zumindest eine weitere Förderelement zusätzlich zu einem Antrieb der Stetigförderereinheit relativ zur Führungseinheit individuell anzutreiben, wobei das zumindest eine Förderelement einer Fördergruppe der Stetigförderereinheit zugeordnet ist und das zumindest eine weitere Förderelement einer weiteren Fördergruppe der Stetigförderereinheit zugeordnet ist, wobei die Individualantriebseinheit zumindest dazu vorgesehen ist, die Fördergruppe und/oder die weitere Fördergruppe individuell anzutreiben, wobei die Individualantriebseinheit zumindest ein Form- und/oder Kraftschlussantriebselement aufweist, das zu einem Antrieb des zumindest einen Förderelements und/oder des zumindest einen weiteren Förderelements mit dem zumindest einen Förderelement und/oder mit dem zumindest einen weiteren Förderelement zusammenwirkt.

Erfindungsgemäß, wird es vorgeschlagen, dass das Form- und/oder Kraftschlussantriebselement als Zahnriemen ausgebildet ist, der entlang einer Gesamterstreckung des Zahnriemens ungleichmäßig verteilt angeordnete Zähne aufweist. Die Individualantriebseinheit ist vorzugsweise zumindest dazu vorgesehen, das zumindest eine Förderelement und/oder das zumindest eine weitere Förderelement unabhängig von der Förderantriebseinheit anzutreiben. Die Individualantriebseinheit ist vorzugsweise zumindest dazu vorgesehen, das zumindest eine Förderelement und das zumindest eine weitere Förderelement unabhängig voneinander anzutreiben, insbesondere zusätzlich zu einem Antrieb der Stetigförderereinheit relativ zur Führungseinheit mittels der Förderantriebseinheit. Die Individualantriebseinheit ist bevorzugt dazu vorgesehen, das zumindest eine Förderelement und/oder das zumindest eine weitere Förderelement aktiv oder passiv anzutreiben. Vorzugsweis ist die Individualantriebseinheit dazu vorgesehen, eine Antriebsbewegung des zumindest einen Förderelements und/oder des zumindest einen weiteren Förderelements einer Antriebsbewegung der Stetigförderereinheit relativ zur Führungseinheit zu überlagern. Die Individualantriebseinheit weist vorzugsweise zumindest eine Elektromotoreinheit auf, die zumindest dazu vorgesehen ist, das zumindest eine Förderelement und/oder das zumindest eine weitere Förderelement rotierend anzutreiben. Die Individualantriebseinheit kann alternativ oder zusätzlich eine andere, einem Fachmann als sinnvoll erscheinend ausgebildete Motoreinheit zu einem Antrieb des zumindest einen Förderelements und/oder des zumindest einen weiteren Förderelements aufweisen, wie beispielsweise eine Magnetantriebseinheit, eine Wirbelstromantriebseinheit, eine Druckluftantriebseinheit o. dgl. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Stetigförderereinheit" soll insbesondere eine Einheit verstanden werden, die dazu vorgesehen ist, einen kontinuierlichen Produktstrom zu erzeugen, wobei insbesondere zumindest eine Transportgeschwindigkeit, mit der Produkte transportierbar sind, und/oder eine Transportrichtung, entlang derer Produkte transportierbar sind, einstellbar sind/ist. Die Steigförderereinheit kann vorzugsweise in unterschiedlichen Geschwindigkeiten betrieben werden. Vorzugsweise umfasst die Transportvorrichtung zumindest eine Steuer- und/oder Regeleinheit, die zumindest dazu vorgesehen ist, zumindest eine Geschwindigkeit der Stetigförderereinheit zu steuern, zu regeln und/oder zu ändern, einen Betrieb der Stetigförderereinheit zu starten oder zu stoppen o. dgl. Bevorzugt ist die Stetigförderereinheit als endloses Förderrollentransportband ausgebildet, das zumindest aus dem zumindest einen Förderelement und dem zumindest einen Förderelement gebildet ist, insbesondere infolge einer kettenartigen Aneinanderreihung des zumindest einen Förderelements und des zumindest einen weiteren Förderelements. Vorzugsweise weist die Stetigförderereinheit eine Vielzahl an Förderelementen, insbesondere Förderrollen, auf, die zu einer Bildung der als endloses Förderrollentransportband ausgebildeten Stetigförderereinheit miteinander verbunden sind. Es ist jedoch auch denkbar, dass die Stetigförderereinheit in einer Ausgestaltung als endloses Fördertransportband ausgebildet ist, das eine Vielzahl an endlosen Förderbandsegmenten aufweist, die, insbesondere kettenartig, miteinander verbunden sind. Die Förderbandsegmente sind vorzugsweise selbst als endlose Förderbänder ausgebildet, die mittels des zumindest einen Förderelements und/oder des zumindest einen weiteren Förderelements, insbesondere zusätzlich zu einem Umlaufantrieb der Stetigförderereinheit, umlaufend antreibbar sind. Die Stetigförderereinheit weist vorzugsweise eine maximale Breite, insbesondere eine quer, insbesondere zumindest im Wesentlichen senkrecht, zu einer Haupttransportrichtung der Stetigförderereinheit verlaufende maximale Breite, auf, die insbesondere größer ist als 790 mm, bevorzugt größer ist als 900 mm und besonders bevorzugt kleiner ist als 2000 mm. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Die Stetigförderereinheit ist vorzugsweise dazu vorgesehen, infolge eines Umlaufantriebs der Stetigförderereinheit relativ zur Führungseinheit Produkte entlang der Haupttransportrichtung der Stetigförderereinheit zu fördern. Eine Förderung von Produkten erfolgt vorzugsweise durch einen Umlaufantrieb der Stetigförderereinheit mittels der Förderantriebseinheit. Denkbar ist auch eine Förderung von Produkten entlang der Haupttransportrichtung der Stetigförderereinheit infolge einer ausschließlichen Antriebsbewegung des zumindest einen Förderelements und/oder des zumindest einen weiteren Förderelements mittels der Individualantriebseinheit, die insbesondere entkoppelt ist von einer Antriebsbewegung der Stetigförderereinheit mittels der Förderantriebseinheit. Ferner ist es denkbar, dass eine Förderung von Produkten infolge einer Überlagerung einer Antriebsbewegung des zumindest einen Förderelements und/oder des zumindest einen weiteren Förderelements mittels der Individualantriebseinheit und einer Antriebsbewegung der Stetigförderereinheit mittels der Förderantriebseinheit erfolgt. Vorzugsweise sind mittels der Individualantriebseinheit verschiedene Betriebszustände erreichbar, wie beispielsweise ein Betriebszustand, in dem das zumindest eine Förderelement und das zumindest eine weitere Förderelement beispielsweise gegenläufig antriebbar sind, ein Betriebszustand, in dem nur eines der beiden Förderelemente antreibbar ist, ein Betriebszustand, in dem beide unangetrieben, insbesondere relativ zur Stetigförderereinheit fixiert, insbesondere eigenrotationsfixiert, sind und lediglich durch eine Umlaufbewegung der Stetigförderereinheit zusammen bewegbar sind o. dgl. Weitere, einem Fachmann als sinnvoll erscheinende Transportmöglichkeiten mittels der Transportvorrichtung, insbesondere der Stetigförderereinheit, sind ebenfalls denkbar.

Unter einem "Produkt" soll insbesondere ein zu verpackender Gegenstand, insbesondere ein unverpackter Gegenstand, oder eine Packung, die zumindest einen Gegenstand enthält oder leer ist, verstanden werden, wie beispielsweise ein Karton, ein Behälter, ein Tray, ein Biskuit, ein Schokoriegel, eine Folienverpackung, wie beispielsweise ein Schlauchbeutel, o. dgl. Die Produkte können jegliche einem Fachmann als sinnvoll erscheinende Produktform aufweisen, wie beispielsweise eine runde, eine ovale, eine polygonale o. dgl. ausgebildete Produktform.

Vorzugsweise weist die Führungseinheit zumindest eine Rahmen- und/oder Gestelleinheit, zumindest eine an der Rahmen- und/oder Gestelleinheit drehbar gelagerte Führungsrolle und/oder eine an der Rahmen- und/oder Gestelleinheit angeordnete Führungsschiene auf. Die Stetigförderereinheit ist vorzugsweise beweglich an der Rahmen- und/oder Gestelleinheit der Führungseinheit gelagert, insbesondere zumindest mittels der Führungsrolle der Führungseinheit und mittels zumindest einer Antriebsrolle der Förderantriebseinheit. Weitere, einem Fachmann als sinnvoll erscheinende Ausgestaltungen der Führungseinheit sind ebenfalls denkbar. Die Förderantriebseinheit weist vorzugsweise zumindest eine Elektromotoreinheit auf, die zumindest dazu vorgesehen ist, die zumindest eine Antriebsrolle der Förderantriebseinheit rotierend anzutreiben. Die Förderantriebseinheit kann alternativ oder zusätzlich eine andere, einem Fachmann als sinnvoll erscheinend ausgebildete Motoreinheit zu einem Antrieb der Stetigförderereinheit aufweisen, wie beispielsweise eine Magnetantriebseinheit, eine Wirbelstromantriebseinheit, eine Druckluftantriebseinheit o. dgl. Zudem ist es denkbar, dass die Förderantriebseinheit zusätzlich eine Getriebeeinheit zu einer Übersetzung einer Antriebskraft der Motoreinheit, insbesondere der Elektromotoreinheit, aufweist.

Vorzugsweise sind das zumindest eine Förderelement und/oder das zumindest eine weitere Förderelement als Förderrolle/n ausgebildet, die/das eine Rotationsachse aufweisen/aufweist, die quer, insbesondere zumindest im Wesentlichen senkrecht, zu der Haupttransportrichtung der Stetigförderereinheit verläuft, insbesondere in einem an der Führungseinheit angeordneten Zustand der Stetigförderereinheit. Vorzugsweise verlaufen/verläuft die Rotationsachse/n des zumindest einen Förderelements und/oder des zumindest einen weiteren Förderelements zumindest im Wesentlichen parallel zu oder in einer Förderebene der Stetigförderereinheit. Zusätzlich ist denkbar, dass das zumindest eine Förderelement und/oder das zumindest eine weitere Förderelement als Antriebsrolle/n jeweils eines Förderbandsegments der Stetigförderereinheit ausgebildet sind/ist. Vorzugsweise ist die Individualantriebseinheit in der alternativen Ausgestaltung dazu vorgesehen, infolge eines individuellen Antriebs des zumindest einen Förderelements und/oder des zumindest einen weiteren Förderelements das/die Förderbandsegment/e individuell, insbesondere zusätzlich zu einem Umlaufantrieb der Stetigförderereinheit, die durch das/die Förderbandsegment/e gebildet ist, anzutreiben. Weitere, einem Fachmann als sinnvoll erscheinende Ausgestaltungen des zumindest einen Förderelements und/oder des zumindest einen weiteren Förderelements sind ebenfalls denkbar.

Mittels der erfindungsgemäßen Ausgestaltung der Transportvorrichtung kann eine vorteilhafte Lückenbildung zwischen vereinzelten Produktreihen eines aus ungeordneten oder regelmäßig versetzten Produkten bestehenden Produkteteppichs ohne Lücken erzeugt werden. Vorteilhafterweise erstrecken sich die Lücken über die gesamte Breite des Produkteteppichs, insbesondere betrachtet quer zur Haupttransportrichtung. Es kann vorteilhaft eine Größe von Lücken zwischen einzelnen generierten Produktreihen eingestellt werden. Eine minimale Größe einer Lücke, insbesondere einer minimalen Größe einer Lücke von mehr als 15 mm, zwischen einzelnen generierten Produktreihen entspricht vorzugsweise einer Länge, einer Breite, eines Durchmessers o. dgl. von einzelnen Produkten, also einer Reihe von Produkten. Vorteilhafterweise können infolge einer Aneinanderreihung von einer Vielzahl an erfindungsgemäßen Individualantriebseinheiten oder an Stetigförderereinheiten Produktreihen aus einem unregelmäßigen Produktteppich in mehreren Schritten generiert werden, wie beispielsweise können in einer ersten Station Reihen mit regelmäßigen Abständen (Lücken) gebildet werden, in einer zweiten Station können Gruppen von Reihen mit größerem Abstand (Lücke) zwischen Gruppen gebildet werden o. dgl. Es kann vorteilhaft eine hohe Förderleistung, insbesondere eine hohe Reihenleistung, wie beispielsweise von 400 bis 600 Reihen pro Minute bei Produkten von beispielsweise einer maximalen Länge von 30 mm, bevorzugt von 45 mm, besonders bevorzugt von 80 mm und ganz besonders bevorzugt von weniger als 210 mm Länge, betrachtet in Haupttransportrichtung, erreicht werden.

Vorzugsweise ist die Individualantriebseinheit dazu vorgesehen, zumindest die Fördergruppe und zumindest die weitere Fördergruppe unabhängig voneinander anzutreiben, insbesondere zusätzlich zu einem Antrieb der als Förderrollentransportband ausgebildeten Stetigförderereinheit relativ zur Führungseinheit. Bevorzugt ist das zumindest eine Förderelement einer Fördergruppe zugeordnet und das zumindest eine weitere Förderelement ist einer weiteren Fördergruppe zugeordnet, wobei die Fördergruppe und die weitere Fördergruppe mittels der Individualantriebseinheit gegenläufig antriebbar sind, nur eine der beiden Fördergruppen antreibbar ist, beide Fördergruppen unangetrieben sind und lediglich zusammen mit einer Umlaufbewegung der Stetigförderereinheit zusammen bewegbar sind, die Fördergruppen mit unterschiedlichen Rotationsgeschwindigkeiten antriebbar sind o. dgl. Bevorzugt umfasst die Stetigförderereinheit eine Vielzahl an Fördergruppen, die mittels der Individualantriebseinheit individuell antreibbar sind. Die Individualantriebseinheit kann zu einem individuellen Antrieb von einzelnen Fördergruppen, eine entsprechend der Anzahl an Fördergruppen entsprechende Anzahl an Einzelmotoreinheiten, wie beispielsweise Elektromotoreinheiten, Wirbelstromantriebseinheiten, Elektromagnetantriebseinheiten o. dgl., aufweisen oder die Individualantriebseinheit weist zumindest eine Verbindungseinheit auf, mittels derer die einzelnen Fördergruppen individuell antreibbar sind, wie beispielsweise einen zumindest temporär in Eingriff mit einzelnen Fördergruppen bringbaren Zahnriemen, der beispielsweise entlang einer Gesamterstreckung des Zahnriemens gleichmäßig verteilt angeordnete Zähne oder ungleichmäßig verteilt angeordnete Zähne aufweist, o. dgl. Es ist auch denkbar, dass mehrere Fördergruppen, beispielsweise zumindest zwei Fördergruppen, zusammen mittels der Individualantriebseinheit individuell relativ zu zumindest einer weiteren Fördergruppe oder relativ zu mehreren Fördergruppen der Stetigförderereinheit antreibbar sind. Weitere, einem Fachmann als sinnvoll erscheinende individuelle Antriebsmöglichkeiten oder Zusammenschaltungen von Fördergruppen sind ebenfalls denkbar. Mittels der erfindungsgemäßen Ausgestaltung kann eine vorteilhafte Lückenbildung zwischen vereinzelten Produktreihen eines aus ungeordneten oder regelmäßig versetzten Produkten bestehenden Produkteteppichs ohne Lücken erzeugt werden. Es kann vorteilhaft eine individuelle Anpassung von angetriebenen Fördergruppen zu einer Reihenbildung realisiert werden. Es kann vorteilhaft entlang einer geringen Gesamtlänge einer Transportstrecke der Stetigförderereinheit eine vorteilhafte Reihenbildung realisiert werden.

Vorzugsweise ist das zumindest eine Form- und/oder Kraftschlussantriebselement dazu vorgesehen, zumindest temporär an dem zumindest einen Förderelement und/oder an dem zumindest einen weiteren Förderelement anzuliegen, insbesondere um das zumindest eine Förderelement und/oder das zumindest eine weitere Förderelement individuell anzutreiben, insbesondere zusätzlich zu einem Antrieb der Stetigförderereinheit relativ zur Führungseinheit. Vorzugsweise ist der Zahnriemen zu einem Eingriff in ein an dem zumindest einen Förderelement und/oder an dem zumindest einen weiteren Förderelement angeordneten Antriebselement der Individualantriebseinheit vorgesehen. Mittels der erfindungsgemäßen Ausgestaltung kann vorteilhaft eine konstruktiv einfache Ausgestaltung der Transportvorrichtung realisiert werden, die insbesondere einen geringen elektronischen Steueraufwand aufweist. Es kann mittels einer konstruktiv einfachen Ausgestaltung eine vorteilhafte Lückenbildung zwischen vereinzelten Produktreihen eines aus ungeordneten oder regelmäßig versetzten Produkten bestehenden Produkteteppichs ohne Lücken erzeugt werden.

Des Weiteren wird vorgeschlagen, dass die Individualantriebseinheit zumindest ein Antriebselement aufweist, das an dem zumindest einen Förderelement oder an dem zumindest einen weiteren Förderelement angeordnet ist. Vorzugsweise ist das Antriebselement an einem dem zumindest einen Form- und/oder Kraftschlussantriebselement zugewandten Ende des zumindest einen Förderelements oder des zumindest einen weiteren Förderelements angeordnet. Vorzugsweise ist an jedem Förderelement der einzelnen Fördergruppen zumindest ein Antriebselement der Individualantriebseinheit angeordnet, das dazu vorgesehen ist, zu einem individuellen Antrieb der einzelnen Fördergruppen mit dem zumindest einen Form- und/oder Kraftschlussantriebselement zusammenzuwirken. Besonders bevorzugt ist das zumindest eine Antriebselement als Verzahnungselement, insbesondere als Zahnrad, ausgebildet, das dazu vorgesehen ist, mit dem zumindest einen Form- und/oder Kraftschlussantriebselement der Individualantriebseinheit zusammenzuwirken. Mittels der erfindungsgemäßen Ausgestaltung kann vorteilhaft eine zuverlässige Individualantriebseinheit realisiert werden. Es kann mittels einer konstruktiv einfachen Ausgestaltung eine vorteilhafte Lückenbildung zwischen vereinzelten Produktreihen eines aus ungeordneten oder regelmäßig versetzten Produkten bestehenden Produkteteppichs ohne Lücken erzeugt werden.

Zudem wird vorgeschlagen, dass die Individualantriebseinheit zumindest eine Kopplungseinheit aufweist, die dazu vorgesehen ist, zumindest ein Antriebselement der Individualantriebseinheit und/oder ein Form- und/oder Kraftschlussantriebselement zu einer Kopplung miteinander oder zu einer Entkopplung voneinander zu bewegen. Vorzugsweise ist die Kopplungseinheit dazu vorgesehen, einen Eingriff des zumindest einen Antriebselements in das Form- und/oder Kraftschlussantriebselement zuzuschalten oder abzuschalten. Die Kopplungseinheit ist vorzugsweise dazu vorgesehen, das zumindest eine Antriebselement und/oder das zumindest eine Form- und/oder Kraftschlussantriebselement relativ zur Führungseinheit zu bewegen, insbesondere entlang einer quer, insbesondere zumindest im Wesentlichen senkrecht, zur Haupttransportrichtung der Stetigförderereinheit. Alternativ ist es auch denkbar, dass die Kopplungseinheit dazu vorgesehen ist, mittels einer Einwirkung einer magnetischen Kraft ein Antriebselement der Individualantriebseinheit und/oder ein Form- und/oder Kraftschlussantriebselement miteinander zu koppeln oder voneinander zu entkoppeln. Die Kopplungseinheit ist vorzugsweise dazu vorgesehen, das zumindest eine Antriebselement und/oder das zumindest eine Form- und/oder Kraftschlussantriebselement voneinander abzuheben, insbesondere um einen individuellen Antrieb des zumindest einen Förderelements und/oder des zumindest einen weiteren Förderelements abzuschalten oder zu unterbinden. Es ist jedoch auch denkbar, dass die Kopplungseinheit alternativ oder zusätzlich dazu vorgesehen ist, eine Vielzahl an Antriebselementen und/oder Form- und/oder Kraftschlussantriebselementen der Individualantriebseinheit unabhängig voneinander zu bewegen, insbesondere um eine individuelle Zuschaltung oder Abschaltung von einzelnen Fördergruppen von Förderelementen zu realisieren. Mittels der erfindungsgemäßen Ausgestaltung kann vorteilhaft eine konstruktiv einfache Zuschaltung oder Abschaltung einer zur Bewegung der Stetigförderereinheit überlagerten Bewegung des zumindest einen Förderelements und/oder des zumindest einen weiteren Förderelements, insbesondere der Fördergruppe und/oder der weiteren Fördergruppe, realisiert werden. Es kann mittels einer konstruktiv einfachen Ausgestaltung eine vorteilhafte Lückenbildung zwischen vereinzelten Produktreihen eines aus ungeordneten oder regelmäßig versetzten Produkten bestehenden Produkteteppichs ohne Lücken erzeugt werden.

Des Weiteren wird vorgeschlagen, dass die Individualantriebseinheit zumindest teilweise an zwei sich abgewandten Seiten des zumindest einen Förderelements und/oder des zumindest einen weiteren Förderelements angeordnet ist. Vorzugsweise umfasst die Individualantriebseinheit zumindest das Form- und/oder Kraftschlussantriebselement, das auf einer Seite des zumindest einen Förderelements und/oder des zumindest einen weiteren Förderelements angeordnet ist, und zumindest ein weiteres Form- und/oder Kraftschlussantriebselement, das auf einer weiteren Seite des zumindest einen Förderelements und/oder des zumindest einen weiteren Förderelements angeordnet ist. Vorzugsweise ist das zumindest eine Form- und/oder Kraftschlussantriebselement zumindest der zumindest einen Fördergruppe zugeordnet. Bevorzugt ist das zumindest eine weitere Form- und/oder Kraftschlussantriebselement zumindest der zumindest einen weiteren Fördergruppe zugeordnet. Bevorzugt sind das zumindest eine Form- und/oder Kraftschlussantriebselement und das zumindest eine weitere Form- und/oder Kraftschlussantriebselement unabhängig voneinander antriebbar. Vorzugsweise ist das zumindest eine Form- und/oder Kraftschlussantriebselement dazu vorgesehen, das zumindest eine Förderelement, insbesondere die zumindest eine Fördergruppe, der das zumindest eine Förderelement zugeordnet ist, anzutreiben, insbesondere temporär. Bevorzugt ist das zumindest eine weitere Form- und/oder Kraftschlussantriebselement dazu vorgesehen, das zumindest eine weitere Förderelement, insbesondere die zumindest eine weitere Fördergruppe, der das zumindest eine weitere Förderelement zugeordnet ist, anzutreiben, insbesondere temporär. Mittels der erfindungsgemäßen Ausgestaltung kann vorteilhaft eine konstruktiv einfache Unterteilung von individuell angetriebenen Förderelementen, insbesondere Fördergruppen, realisiert werden. Es kann mittels einer konstruktiv einfachen Ausgestaltung eine vorteilhafte Lückenbildung zwischen vereinzelten Produktreihen eines aus ungeordneten oder regelmäßig versetzten Produkten bestehenden Produkteteppichs ohne Lücken erzeugt werden.

Ferner wird vorgeschlagen, dass die Individualantriebseinheit, insbesondere in einer Ausgestaltung der Individualantriebseinheit, zumindest ein Magnetantriebselement aufweist, das zu einem Antrieb des zumindest einen Förderelements und/oder des zumindest einen weiteren Förderelements mit dem zumindest einen Förderelement und/oder mit dem zumindest einen weiteren Förderelement zusammenwirkt. Das Magnetantriebselement kann als Permanentmagnet oder als Elektromagnet ausgebildet sein. Bevorzugt ist, insbesondere in einer Ausgestaltung der Individualantriebseinheit, an dem zumindest einen Förderelement und/oder an dem zumindest einen weiteren Förderelement zumindest ein korrespondierend zum Magnetantriebselement der Individualantriebseinheit ausgebildetes Gegenmagnetantriebselement der Individualantriebseinheit angeordnet. Vorzugsweise ist, insbesondere in einer Ausgestaltung der Individualantriebseinheit, an jedem Förderelement der Stetigförderereinheit zumindest ein korrespondierend zum Magnetantriebselement der Individualantriebseinheit ausgebildetes Gegenmagnetantriebselement der Individualantriebseinheit angeordnet. Es ist jedoch auch denkbar, dass, insbesondere in einer Ausgestaltung der Individualantriebseinheit, jeweils pro Fördergruppe zumindest ein, insbesondere lediglich ein einzelnes, korrespondierend zum Magnetantriebselement der Individualantriebseinheit ausgebildetes Gegenmagnetantriebselement der Individualantriebseinheit vorgesehen ist. Das Gegenmagnetantriebselement der Individualantriebseinheit kann als Permanentmagnet oder als Elektromagnet ausgebildet sein. Vorzugsweise ist die Steuer- und/oder Regeleinheit der Transportvorrichtung dazu vorgesehen, das Magnetantriebselement und/oder das Gegenmagnetantriebselement der Individualantriebseinheit zu aktivieren oder zu deaktivieren oder einen Aktor anzusteuern, der dazu vorgesehen ist, das Magnetantriebselement und/oder das Gegenmagnetantriebselement der Individualantriebseinheit in eine Aktivposition oder eine Nichtaktivposition zu bewegen. Mittels der erfindungsgemäßen Ausgestaltung kann vorteilhaft eine kompakte Ausgestaltung der Individualantriebseinheit realisiert werden, um eine vorteilhafte Lückenbildung zwischen vereinzelten Produktreihen eines aus ungeordneten oder regelmäßig versetzten Produkten bestehenden Produkteteppichs ohne Lücken zu erzeugen.

Zudem wird vorgeschlagen, dass die Transportvorrichtung zumindest eine Vakuumeinheit zu einer Erzeugung eines Unterdrucks zu einer Anziehung des zumindest einen Produkts in Richtung des zumindest einen Förderelements und/oder des zumindest einen weiteren Förderelements. Die Vakuumeinheit umfasst vorzugsweise zumindest einen Unterdruckerzeuger, wie beispielsweise ein Vakuumgebläse o. dgl. Vorzugsweise weist der Unterdruckerzeuger eine, einem Fachmann bereits bekannte Ausgestaltung auf. Vorzugsweise ist die Vakuumeinheit unterhalb der Stetigförderereinheit angeordnet, insbesondere derart, dass die Stetigförderereinheit über Vakuumöffnungen der Vakuumeinheit hinwegbewegbar ist, oder die Vakuumeinheit ist zumindest teilweise in die Stetigförderereinheit, insbesondere in das zumindest eine Förderelement und/oder das zumindest eine weitere Förderelement, integriert. Mittels der erfindungsgemäßen Ausgestaltung kann vorteilhaft eine Vakuumbeaufschlagung der Stetigförderereinheit realisiert werden. Es kann vorteilhaft eine sichere Reihenbildung von Produkten realisiert werden, insbesondere da eine vorteilhaft Einwirkung von Antriebskräften des zumindest einen Förderelements und/oder des zumindest einen weiteren Förderelements auf die Produkte realisiert werden kann. Es kann eine vorteilhafte Lückenbildung zwischen vereinzelten Produktreihen eines aus ungeordneten oder regelmäßig versetzten Produkten bestehenden Produkteteppichs ohne Lücken erzeugt werden.

Des Weiteren wird vorgeschlagen, dass das zumindest eine Förderelement und/oder das zumindest eine weitere Förderelement entlang einer quer zu einer Haupttransportrichtung der Stetigförderereinheit verlaufenden Richtung eine maximale Mantelflächenerstreckung aufweisen/aufweist, die zumindest im Wesentlichen einer maximalen Quererstreckung der Stetigförderereinheit entspricht. Vorzugsweise verläuft eine maximale Mantelflächenerstreckung des zumindest einen Förderelements und/oder des zumindest einen weiteren Förderelements entlang einer zumindest im Wesentlichen parallel zur Rotationsachse des zumindest einen Förderelements und/oder des zumindest einen weiteren Förderelements verlaufenden Richtung. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Es ist jedoch auch denkbar, dass, insbesondere in einer alternativen Ausgestaltung der Stetigförderereinheit, das zumindest eine Förderelement und/oder das zumindest eine weitere Förderelement eine maximale Mantelflächenerstreckung aufweist, die kleiner ist als eine maximale Quererstreckung der Stetigförderereinheit, insbesondere derart, dass zumindest zwei Förderelemente, insbesondere entlang einer quer, insbesondere zumindest im Wesentlichen senkrecht, zur Haupttransportrichtung und/oder zumindest im Wesentlichen parallel zur Rotationsachse des zumindest einen Förderelements verlaufenden Richtung, in einer Reihe nebeneinander anordenbar sind. Mittels der erfindungsgemäßen Ausgestaltung kann vorteilhaft eine große Wirkfläche des zumindest einen Förderelements und/oder des zumindest einen weiteren Förderelements zu einer Reihenbildung bereitgestellt werden. Es kann eine vorteilhafte Lückenbildung zwischen vereinzelten Produktreihen eines aus ungeordneten oder regelmäßig versetzten Produkten bestehenden Produkteteppichs ohne Lücken erzeugt werden. Insbesondere können bei einer Anordnung von mehreren Förderelementen entlang einer quer, insbesondere zumindest im Wesentlichen senkrecht, zur Haupttransportrichtung und/oder zumindest im Wesentlichen parallel zur Rotationsachse des zumindest einen Förderelements verlaufenden Richtung vorteilhaft unterschiedliche Reihenbildungsfunktionen je Seite der Stetigförderereinheit realisiert werden.

Ferner geht die Erfindung aus von einem Verfahren zu einem Transport von Produkten zu einer Bildung von Reihen und/oder Gruppen aus Produkten mittels einer erfindungsgemäßen Transportvorrichtung, wobei in zumindest einem Verfahrensschritt das zumindest eine Förderelement, insbesondere zumindest eine Fördergruppe, mittels der Individualantriebseinheit mit einer Rotationsgeschwindigkeit und/oder mit einer Rotationsrichtung angetrieben wird, die abweichend ist von einer Rotationsgeschwindigkeit und/oder von einer Rotationsrichtung des zumindest einen weiteren Förderelements, insbesondere zumindest einer weiteren Fördergruppe. Mittels der erfindungsgemäßen Ausgestaltung kann eine vorteilhafte Lückenbildung zwischen vereinzelten Produktreihen eines aus ungeordneten oder regelmäßig versetzten Produkten bestehenden Produkteteppichs ohne Lücken erzeugt werden. Vorteilhafterweise erstrecken sich die Lücken über die gesamte Breite des Produkteteppichs, insbesondere betrachtet quer zur Haupttransportrichtung. Es kann vorteilhaft eine Größe von Lücken zwischen einzelnen generierten Produktreihen eingestellt werden. Eine minimale Größe einer Lücke zwischen einzelnen generierten Produktreihen entspricht vorzugsweise einer Länge, einer Breite, eines Durchmessers o. dgl. von einzelnen Produkten, also einer Reihe von Produkten. Vorteilhafterweise können infolge einer Aneinanderreihung von einer Vielzahl an erfindungsgemäßen Individualantriebseinheiten oder an Stetigförderereinheiten Produktreihen aus einem unregelmäßigen Produktteppich in mehreren Schritten generiert werden, wie beispielsweise können in einer ersten Station Reihen mit regelmäßigen Abständen (Lücken) gebildet werden, in einer zweiten Station können Gruppen von Reihen mit größerem Abstand (Lücke) zwischen Gruppen gebildet werden o. dgl.

Zudem wird vorgeschlagen, dass in zumindest einem Verfahrensschritt das zumindest eine Förderelement, insbesondere zumindest eine Fördergruppe, und das zumindest eine weitere Förderelement, insbesondere zumindest eine weitere Fördergruppe, mittels der Individualantriebseinheit mit entgegengesetzten Rotationsrichtungen und/oder mit unterschiedlichen Rotationsgeschwindigkeiten angetrieben werden, insbesondere zusätzlich zu einem Antrieb der Stetigförderereinheit entlang der Haupttransportrichtung der Stetigförderereinheit. Vorzugsweise wird das zumindest eine Förderelement, insbesondere die zumindest eine Fördergruppe, in Richtung der Haupttransportrichtung der Stetigförderereinheit rotierend angetrieben. Bevorzugt wird das zumindest eine weitere Förderelement, insbesondere die zumindest eine weitere Fördergruppe, entgegen der Haupttransportrichtung der Stetigförderereinheit rotierend angetrieben. Es ist jedoch auch denkbar, dass das zumindest eine weitere Förderelement, insbesondere die zumindest eine weitere Fördergruppe, in Richtung der Haupttransportrichtung der Stetigförderereinheit rotierend angetrieben wird und dass das zumindest eine Förderelement, insbesondere die zumindest eine Fördergruppe, entgegen der Haupttransportrichtung der Stetigförderereinheit rotierend angetrieben wird oder dass lediglich eines der Förderelemente, insbesondere zumindest eine der Fördergruppen, rotierend angetrieben wird während das andere Förderelement, insbesondere die andere Fördergruppe, unangetrieben ist, insbesondere während eines Umlaufantriebs der Stetigförderereinheit relativ zur Führungseinheit. Mittels der erfindungsgemäßen Ausgestaltung kann vorteilhaft eine Bewegung von Produkten aufeinander zu realisiert werden. Es kann eine vorteilhafte Lückenbildung zwischen vereinzelten Produktreihen eines aus ungeordneten oder regelmäßig versetzten Produkten bestehenden Produkteteppichs ohne Lücken erzeugt werden.

Des Weiteren wird vorgeschlagen, dass in zumindest einem Verfahrensschritt eine mittels der Individualantriebseinheit erzeugte Rotationsbewegung des zumindest einen Förderelements, insbesondere der zumindest einen Fördergruppe, und des zumindest einen weiteren Förderelements, insbesondere der zumindest einen weiteren Fördergruppe, einer mittels einer Förderantriebseinheit erzeugten Antriebsbewegung der Stetigförderereinheit relativ zur Führungseinheit überlagert ist. Vorzugsweise wird eine Rotationsbewegung des zumindest einen Förderelements, insbesondere der zumindest einen Fördergruppe, und des zumindest einen weiteren Förderelements, insbesondere der zumindest einen weiteren Fördergruppe, einer Umlaufbewegung der Stetigförderereinheit relativ zur Führungseinheit überlagert. Mittels der erfindungsgemäßen Ausgestaltung kann vorteilhaft insbesondere während eines Transports von Produkten entlang der Haupttransportrichtung der Stetigförderereinheit eine vorteilhafte Lückenbildung zwischen vereinzelten Produktreihen eines aus ungeordneten oder regelmäßig versetzten Produkten bestehenden Produkteteppichs ohne Lücken erzeugt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Transportstrecke einer Verpackungsmaschine mit zumindest einer erfindungsgemäße Transportvorrichtung in einer schematischen Darstellung,
- Fig. 2: eine Detailansicht der erfindungsgemäßen Transportvorrichtung in einer schematischen Darstellung,
- Fig. 3: eine Detailansicht einer Stetigförderereinheit der erfindungsgemäßen Transportvorrichtung mit individuell angetriebenen Förderelementen oder Fördergruppen aus Förderelementen der Stetigförderereinheit in einer schematischen Darstellung,
- Fig. 4: eine Detailansicht einer Förderantriebseinheit der erfindungsgemäßen Transportvorrichtung zu einem Antrieb der Stetigförderereinheit in einer schematischen Darstellung,
- Fig. 5: eine Detailansicht einer Individualantriebseinheit der erfindungsgemäßen Transportvorrichtung zu einem individuellen Antrieb von Förderelementen oder von Fördergruppen aus Förderelementen der Stetigförderereinheit in einer schematischen Darstellung,
- Fig. 6: eine mögliche Reihenbildungsfunktion aus einem lückenlosen Produktteppich mittels der erfindungsgemäßen Transportvorrichtung in einer schematischen Darstellung,
- Fig. 7: eine mögliche Inline-Buffer-Funktion aus einem ungeordneten Produktteppich mittels der erfindungsgemäßen Transportvorrichtung in einer schematischen Darstellung,
- Fig. 8: eine mögliche Inline-Laning-Funktion aus einem ungeordneten Produktteppich mittels der erfindungsgemäßen Transportvorrichtung in einer schematischen Darstellung,
- Fig. 9: eine alternative Ausgestaltung der erfindungsgemäßen Transportvorrichtung in einer schematischen Darstellung und
- Fig. 10: eine Detailansicht einer Stetigförderereinheit der alternativen erfindungsgemäßen Transportvorrichtung mit individuell angetriebenen Förderelementen oder Fördergruppen aus Förderelementen der Stetigförderereinheit in einer schematischen Darstellung.

### Beschreibung der Ausführungsbeispiele

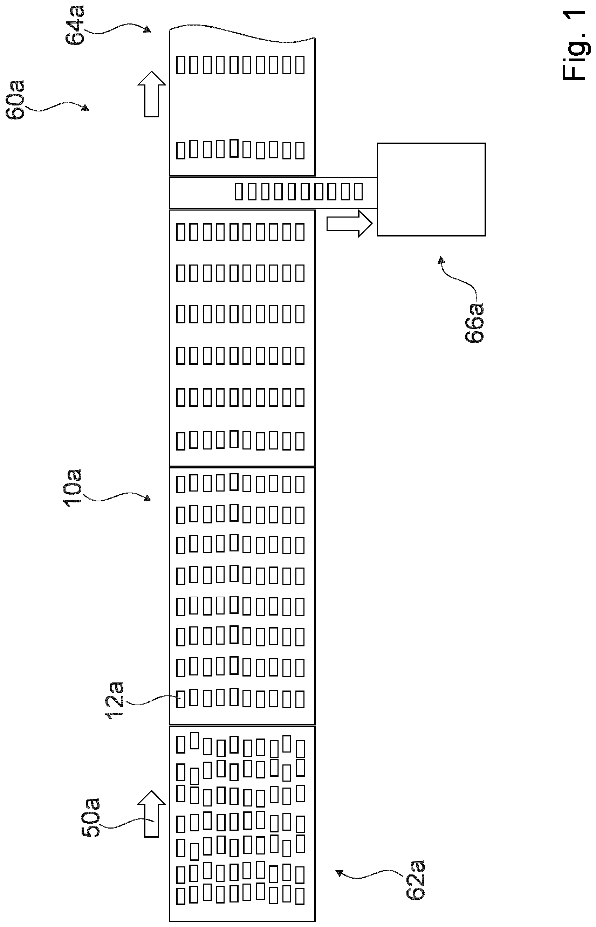

Figur 1 zeigt einen Teil einer Transportstrecke einer Verpackungsmaschine 60a zu einer Durchführung eines Verpackungsprozesses von Produkten 12a. Die Verpackungsmaschine 60a umfasst zumindest eine Transportvorrichtung 10a zu einem Transport von zumindest einem Produkt 12a, von zumindest einer Produktgruppe und/oder von zumindest einem Produktstapel, insbesondere zu einer Zuführung zu einem Verpackungsprozess der Verpackungsmaschine 60a. Es ist jedoch auch denkbar, dass die Transportvorrichtung 10a Teil einer anderen, einem Fachmann als sinnvoll erscheinenden Maschine ist, die zumindest eine Transportstrecke aufweist, wie beispielsweise Teil einer Fördermaschine o. dgl. Die Transportvorrichtung 10a ist vorzugsweise dazu vorgesehen, zumindest ein Produkt 12a, zumindest eine Produktgruppe und/oder zumindest einen Produktstapel von einer Zuführvorrichtung 62a der Verpackungsmaschine 60a zu einer Abführvorrichtung 64a der Verpackungsmaschine 60a zu übergeben. Die Verpackungsmaschine 60a kann eine Vielzahl in Reihe angeordnete Transportvorrichtungen 10a aufweisen, die insbesondere zwischen der Zuführvorrichtung 62a und der Abführvorrichtung 64a angeordnet sind. Vorzugsweise umfasst die Verpackungsmaschine 60a zumindest eine Entnahmeeinheit 66a, die zu einer Entnahme von Produkten 12a, insbesondere von zumindest einer mittels der Transportvorrichtung 10a gebildeten Reihe von Produkten 12a, vorgesehen ist oder die zu einer direkten Zuführung von Produkten 12a zu einem Verpackungsprozess vorgesehen ist. Bevorzugt ist die Entnahmeeinheit 66a dazu vorgesehen, Produkte 12a, insbesondere von zumindest einer mittels der Transportvorrichtung 10a gebildeten Reihe von Produkten 12a, entlang einer quer, insbesondere zumindest im Wesentlichen senkrecht, zu einer Haupttransportrichtung 50a der Transportvorrichtung 10a verlaufenden Richtung von der Transportvorrichtung 10a zu entnehmen, insbesondere entlang eines Produktstroms betrachtet vor der Abführvorrichtung 64a. Die Entnahmeeinheit 66a ist insbesondere als Querförderer ausgebildet. Es ist jedoch auch denkbar, dass die Entnahmeeinheit 66a eine andere, einem Fachmann als sinnvoll erscheinende Ausgestaltung aufweist, wie beispielsweise als Greifereinheit, als Saugnapfeinheit o. dgl.

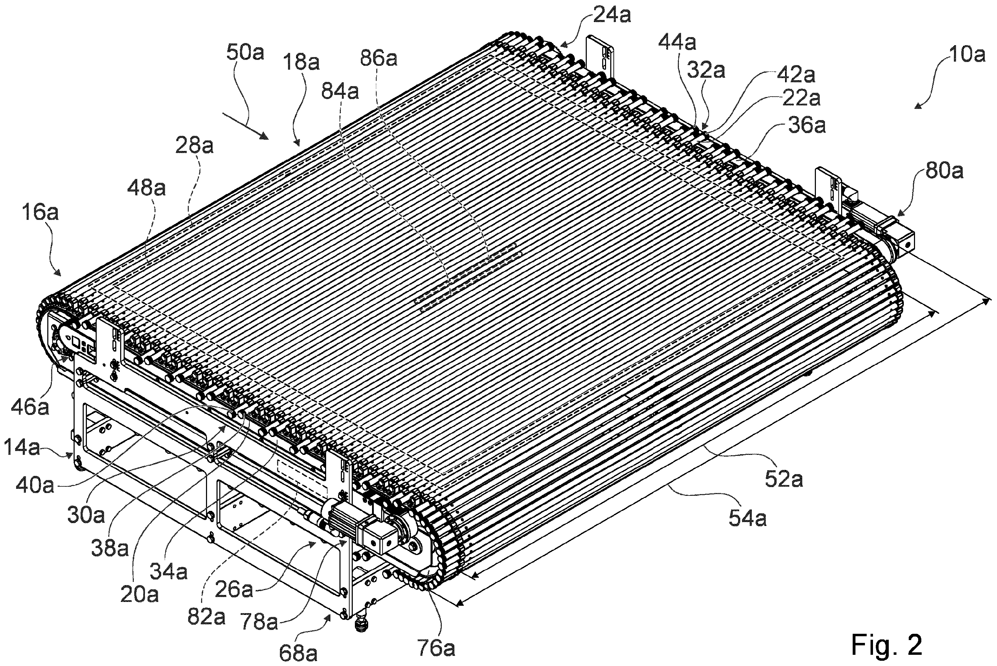

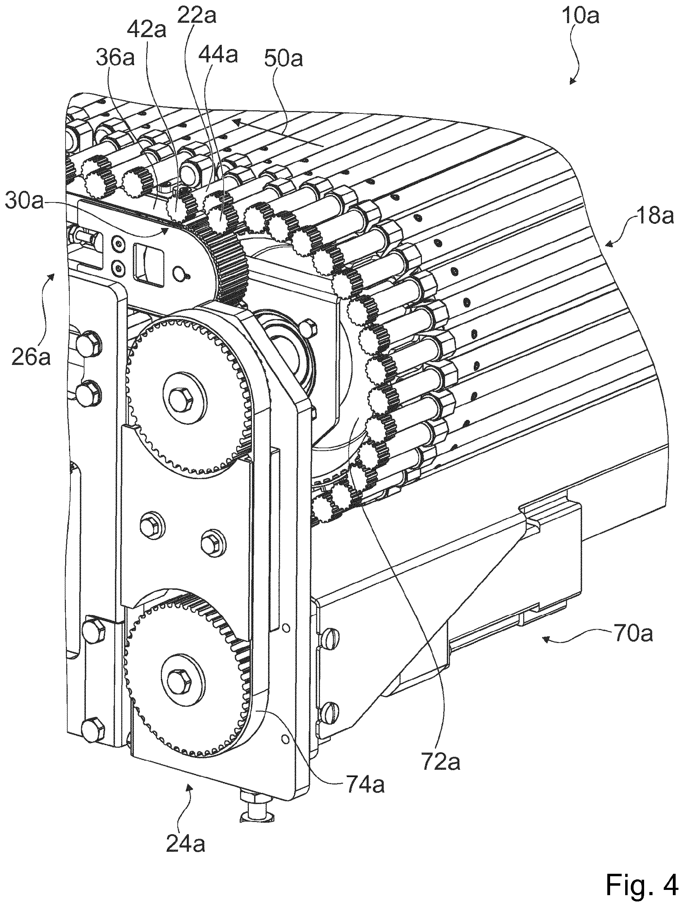

Figur 2 zeigt eine Detailansicht einer einzelnen Transportvorrichtung 10a. Die Transportvorrichtung 10a zu einem Transport von zumindest einem Produkt 12a, zu einer Bildung von Reihen und/oder Gruppen aus Produkten 12a, umfasst zumindest eine Führungseinheit 14a, zumindest eine Fördereinheit 16a, die zumindest eine relativ zur Führungseinheit 14a beweglich gelagerte Stetigförderereinheit 18a, ein endloses Förderrollentransportband, aufweist. Die Stetigförderereinheit 18a umfasst zumindest ein beweglich gelagertes Förderelement 20a, eine Förderrolle, und zumindest ein weiteres beweglich gelagertes Förderelement 22a, eine weitere Förderrolle, die zur Bildung der Stetigförderereinheit 18a miteinander verbunden sind und zumindest gemeinsam relativ zur Führungseinheit 14a bewegbar sind. Das zumindest eine Förderelement 20a und/oder das zumindest eine weitere Förderelement 22a weisen/weist entlang einer quer zur Haupttransportrichtung 50a der Stetigförderereinheit 18a verlaufenden Richtung eine maximale Mantelflächenerstreckung 52a auf, die zumindest im Wesentlichen einer maximalen Quererstreckung 54a der Stetigförderereinheit 18a entspricht. Die Stetigförderereinheit 18a umfasst vorzugsweise eine Vielzahl an beweglich gelagerten Förderelementen 20a, 22a, die zu einer Bildung der Stetigförderereinheit 18a miteinander verbunden sind und zumindest gemeinsam, insbesondere entlang der Haupttransportrichtung 50a der Stetigförderereinheit 18a relativ zur Führungseinheit 14a bewegbar sind. Die Transportvorrichtung 10a umfasst ferner zumindest eine Förderantriebseinheit 24a zu einem Antrieb der Stetigförderereinheit 18a relativ zur Führungseinheit 14a, insbesondere zu einem umlaufenden Antrieb der Stetigförderereinheit 18a um die Führungseinheit 14a, insbesondere um eine Führungsrolle 76a der Führungseinheit 14a. Die Führungseinheit 14a umfasst vorzugsweise zumindest eine Rahmen- und/oder Gestelleinheit 68a an der zumindest die Führungsrolle 76a der Führungseinheit 14a und die Förderantriebseinheit 24a zumindest teilweise angeordnet und/oder gelagert sind (vgl. Figur 4). Die Förderantriebseinheit 24a umfasst vorzugsweise zumindest eine Elektromotoreinheit 70a zu einem Antrieb der Stetigförderereinheit 18a relativ zur Führungseinheit 14a, insbesondere relativ zur Rahmen- und/oder Gestelleinheit 68a. Die Förderantriebseinheit 24a weist zumindest eine Antriebsrolle 72a auf, an der die Stetigförderereinheit 18a bevorzugt zu einem Antrieb anliegt. Die Förderantriebseinheit 20a weist insbesondere einen Antriebsriemen 74a zu einer Übertragung und/oder einer Übersetzung einer Antriebskraft von der Elektromotoreinheit 70a an die Antriebsrolle 72a auf (vgl. Figur 4). Es ist jedoch auch denkbar, dass die Förderantriebseinheit 24a eine andere, einem Fachmann als sinnvoll erscheinende Einheit, wie beispielsweise eine Zahnradeinheit o. dgl., zu einer Übertragung und/oder einer Übersetzung einer Antriebskraft von der Elektromotoreinheit 70a an die Antriebsrolle 72a aufweist.

Des Weiteren umfasst die Transportvorrichtung 10a zumindest eine Individualantriebseinheit 26a, die zumindest dazu vorgesehen ist, zumindest das zumindest eine Förderelement 20a und/oder das zumindest eine weitere Förderelement 22a individuell anzutreiben, insbesondere zusätzlich zu einem Antrieb der Stetigförderereinheit 18a relativ zur Führungseinheit 14a mittels der Förderantriebseinheit 24a. Die Transportvorrichtung 10a umfasst vorzugsweise eine Steuer- und/oder Regeleinheit 82a zu einer Steuerung und/oder Regelung der Individualantriebseinheit 26a. Die Individualantriebseinheit 26a ist vorzugsweise zumindest dazu vorgesehen, das zumindest eine Förderelement 20a und/oder das zumindest eine weitere Förderelement 22a unabhängig von der Förderantriebseinheit 24a anzutreiben. Die Individualantriebseinheit 26a ist vorzugsweise zumindest dazu vorgesehen, das zumindest eine Förderelement 20a und das zumindest eine weitere Förderelement 22a unabhängig voneinander anzutreiben, insbesondere zusätzlich zu einem Antrieb der Stetigförderereinheit 18a relativ zur Führungseinheit 14a mittels der Förderantriebseinheit 24a. Die Individualantriebseinheit 26a ist bevorzugt dazu vorgesehen, das zumindest eine Förderelement 20a und/oder das zumindest eine weitere Förderelement 22a aktiv oder passiv anzutreiben. Vorzugsweis ist die Individualantriebseinheit 26a dazu vorgesehen, eine Antriebsbewegung des zumindest einen Förderelements 20a und/oder des zumindest einen weiteren Förderelements 22a einer Antriebsbewegung der Stetigförderereinheit 18a relativ zur Führungseinheit 14a zu überlagern. Die Individualantriebseinheit 26a weist vorzugsweise zumindest eine Elektromotoreinheit 78a auf, die zumindest dazu vorgesehen ist, das zumindest eine Förderelement 20a und/oder das zumindest eine weitere Förderelement 22a rotierend anzutreiben. Bevorzugt weist die Individualantriebseinheit 26a zumindest eine weitere Elektromotoreinheit 80a auf, die zumindest dazu vorgesehen ist, das zumindest eine Förderelement 20a und/oder das zumindest eine weitere Förderelement 22a rotierend anzutreiben. Insbesondere ist die Elektromotoreinheit 78a dem zumindest einen Förderelement 20a, insbesondere zumindest einer das zumindest eine Förderelement 20a umfassenden Fördergruppe 30a der Stetigförderereinheit 18a, zugeordnet. Insbesondere ist die weitere Elektromotoreinheit 80a dem zumindest einen weiteren Förderelement 22a, insbesondere zumindest einer das zumindest eine weitere Förderelement 22a umfassenden weiteren Fördergruppe 32a der Stetigförderereinheit 18a, zugeordnet. Es ist jedoch auch denkbar, dass die Individualantriebseinheit 26a alternativ oder zusätzlich eine andere, einem Fachmann als sinnvoll erscheinend ausgebildete Motoreinheit zu einem Antrieb des zumindest einen Förderelements 20a und/oder des zumindest einen weiteren Förderelements 22a aufweist, wie beispielsweise eine Magnetantriebseinheit, eine Wirbelstromantriebseinheit, eine Druckluftantriebseinheit o. dgl.

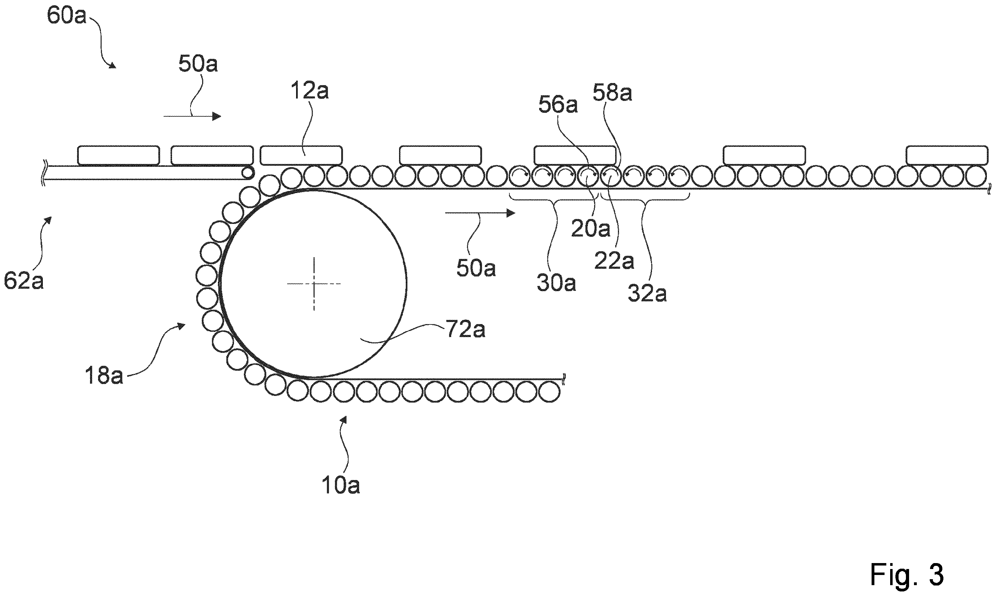

Das zumindest eine Förderelement 20a ist einer Fördergruppe 30a der Stetigförderereinheit 18a zugeordnet und das zumindest eine weitere Förderelement 22a ist einer weiteren Fördergruppe 32a der Stetigförderereinheit 18a zugeordnet, wobei die Individualantriebseinheit 26a zumindest dazu vorgesehen ist, die Fördergruppe 30a und/oder die weitere Fördergruppe 32a individuell anzutreiben. Die Fördergruppe 30a umfasst vorzugsweise eine Vielzahl an Förderelementen 20a, die vorzugsweise gemeinsam mittels der Individualantriebseinheit 26a individuell antreibbar sind. Die weitere Fördergruppe 32a umfasst vorzugsweise eine Vielzahl an weiteren Förderelementen 22a, die vorzugsweise gemeinsam mittels der Individualantriebseinheit 26a individuell antreibbar sind. Vorzugsweise ist die Individualantriebseinheit 26a dazu vorgesehen, zumindest die Fördergruppe 30a und zumindest die weitere Fördergruppe 32a unabhängig voneinander anzutreiben, insbesondere zusätzlich zu einem Antrieb der als Förderrollentransportband ausgebildeten Stetigförderereinheit 18a relativ zur Führungseinheit 14a mittels der Förderantriebseinheit 24a. Bevorzugt umfasst die Stetigförderereinheit 18a eine Vielzahl an Fördergruppen 30a und/oder weiteren Fördergruppen 32a, die mittels der Individualantriebseinheit 26a individuell antreibbar sind. Die Fördergruppen 30a und/oder die weiteren Fördergruppen 32a können gleichmäßig verteilt, wie beispielsweise im Wechsel verteilt, entlang einer Gesamterstreckung der Stetigförderereinheit 18a an der Stetigförderereinheit 18a angeordnet sein oder die Fördergruppen 30a und/oder die weiteren Fördergruppen 32a können ungleichmäßig, wie beispielsweise zwei Fördergruppen 30a gefolgt von einer weiteren Fördergruppe 32a, eine Fördergruppe 30a gefolgt von zwei weiteren Fördergruppen 32a, eine ungerade oder gerade Anzahl an Fördergruppen 30a gefolgt von einer ungeraden oder geraden Anzahl an weiteren Fördergruppen 32a o. dgl. entlang der Gesamterstreckung der Stetigförderereinheit 18a an der Stetigförderereinheit 18a angeordnet sein. Ein Fachmann wird in Abhängigkeit von einem Anwendungsgebiet eine für das Anwendungsgebiet sinnvolle Unterteilung von Fördergruppen 30a und/oder weiteren Fördergruppen 32a vornehmen. Vorzugsweise sind mittels der Individualantriebseinheit 26a verschiedene Betriebszustände eines individuellen Antriebs des zumindest einen Förderelements 20a, insbesondere der zumindest einen Fördergruppe 30a, und des zumindest einen weiteren Förderelements 22a, insbesondere der zumindest einen weiteren Fördergruppe 32a, erreichbar, wie beispielsweise ein Betriebszustand, in dem das zumindest eine Förderelement 20a, insbesondere die zumindest eine Fördergruppe 30a, und das zumindest eine weitere Förderelement 22a, insbesondere die zumindest eine weitere Fördergruppe 32a, beispielsweise gegenläufig antriebbar sind (vgl. beispielhaft Figur 3), ein Betriebszustand, in dem nur eines der beiden Förderelemente 20a, 22a, insbesondere eine der beiden Fördergruppen 30a, 32a, antreibbar ist, ein Betriebszustand, in dem beide Förderelemente 20a, 22a, insbesondere beide Fördergruppen 30a, 32a, unangetrieben sind und lediglich durch eine Umlaufbewegung der Stetigförderereinheit 18a zusammen bewegbar sind o. dgl. Weitere, einem Fachmann als sinnvoll erscheinende Antriebsmöglichkeiten der Förderelemente 20a, 22a, insbesondere der Fördergruppen 30a, 32a sind ebenfalls denkbar.

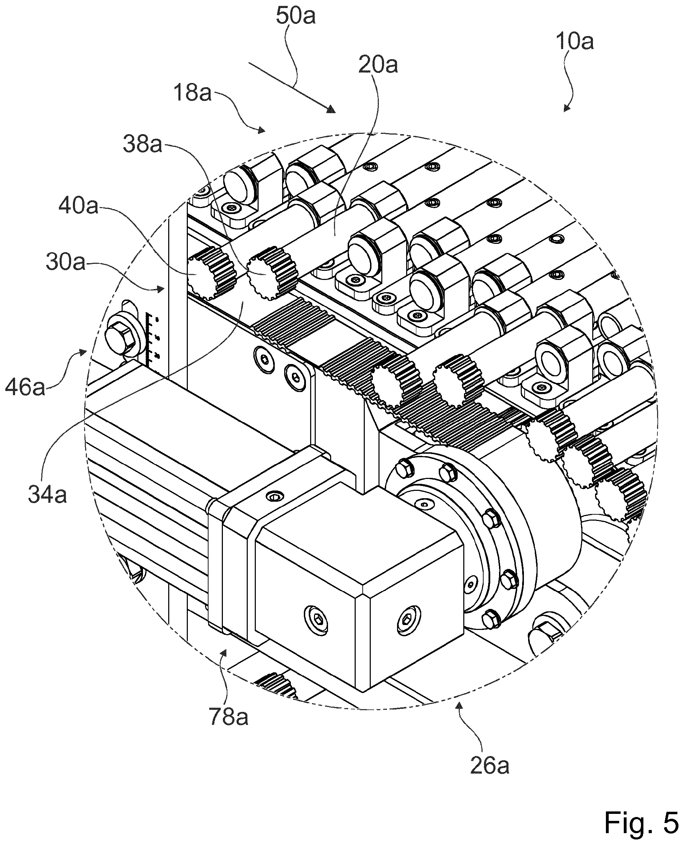

Die Individualantriebseinheit 26a weist zumindest ein Form- und/oder Kraftschlussantriebselement 34a auf, das zu einem Antrieb des zumindest einen Förderelements 20a, insbesondere der zumindest einen Fördergruppe 30a, und/oder des zumindest einen weiteren Förderelements 22a, insbesondere der zumindest einen weiteren Fördergruppe 32a, zumindest mit dem zumindest einen Förderelement 20a und/oder mit dem zumindest einen weiteren Förderelement 22a zusammenwirkt (vgl. Figuren 2, 4 und 5). Vorzugsweise umfasst die Individualantriebseinheit 26a zumindest ein weiteres Form- und/oder Kraftschlussantriebselement 36a das zu einem Antrieb des zumindest einen Förderelements 20a, insbesondere der zumindest einen Fördergruppe 30a, und/oder des zumindest einen weiteren Förderelements 22a, insbesondere der zumindest einen weiteren Fördergruppe 32a, zumindest mit dem zumindest einen Förderelement 20a und/oder mit dem zumindest einen weiteren Förderelement 22a zusammenwirkt (vgl. Figuren 2, 4 und 5). Vorzugsweise ist das zumindest eine Form- und/oder Kraftschlussantriebselement 34a dem zumindest einen Förderelement 20a, insbesondere der zumindest einen Fördergruppe 30a, zugeordnet. Bevorzugt ist das zumindest eine weitere Form- und/oder Kraftschlussantriebselement 36a und dem zumindest einen weiteren Förderelement 22a, insbesondere der zumindest einen weiteren Fördergruppe 32a, zugeordnet. Das zumindest eine Form- und/oder Kraftschlussantriebselement 34a das zumindest eine weitere Form- und/oder Kraftschlussantriebselement 36a weisen vorzugsweise eine zumindest im Wesentlichen analoge Ausgestaltung auf, so dass insbesondere eine Beschreibung eines der beiden Form- und/oder Kraftschlussantriebselemente 34a, 36a auf das andere übertragbar ist. Es ist jedoch auch denkbar, dass die beiden Form- und/oder Kraftschlussantriebselemente 34a, 36a eine zumindest teilweise voneinander verschiedene Ausgestaltung aufweisen. Das Form- und/oder Kraftschlussantriebselement 34a, 36a ist vorzugsweise als Zahnriemen ausgebildet. Das Form- und/oder Kraftschlussantriebselement 34a, 36a weist vorzugsweise gleichmäßig oder ungleichmäßig entlang einer Gesamterstreckung des Form- und/oder Kraftschlussantriebselements 34a, 36a verteilt angeordnete Zähne auf. Das zumindest eine Form- und/oder Kraftschlussantriebselement 34a ist vorzugsweise mittels der Elektromotoreinheit 78a der Individualantriebseinheit 26a antreibbar, insbesondere umlaufend antreibbar. Das zumindest eine weitere Form- und/oder Kraftschlussantriebselement 36a ist vorzugsweise mittels der weiteren Elektromotoreinheit 80a der Individualantriebseinheit 26a antreibbar, insbesondere umlaufend antreibbar.

Die Individualantriebseinheit 26a weist zumindest ein Antriebselement 38a, 40a, 42a, 44a auf, das an dem zumindest einen Förderelement 20a, insbesondere an der zumindest einen Fördergruppe 30a, oder an dem zumindest einen weiteren Förderelement 22a, insbesondere an der zumindest einen weiteren Fördergruppe 32a, angeordnet ist (vgl. Figuren 2, 4 und 5). Insbesondere ist zumindest ein Antriebselement 38a an zumindest einem Ende des zumindest einen Förderelements 20a angeordnet. Das zumindest eine Antriebselement 38a ist vorzugsweise drehfest mit dem zumindest einen Förderelement 20a verbunden. Bevorzugt ist zumindest ein Antriebselement 42a an zumindest einem Ende des zumindest einen weiteren Förderelements 22a angeordnet. Das zumindest eine Antriebselement 42a ist vorzugsweise drehfest mit dem zumindest einen weiteren Förderelement 22a verbunden. Vorzugsweise umfasst die Individualantriebseinheit 26a eine Vielzahl an Antriebselementen 38a, 40a, 42a, 44a, wobei jeweils zumindest eins pro Fördergruppe 30a, 32a vorgesehen ist. Es ist jedoch auch denkbar, dass jeweils ein Antriebselement 38a, 40a, 42a, 44a pro Förderelement 20a, 22a je Fördergruppe 30a, 32a vorgesehen ist und zumindest temporär mit dem Form- und/oder Kraftschlussantriebselement 34a und/oder mit dem weiteren Form- und/oder Kraftschlussantriebselement 36a zusammenwirkt. Die Vielzahl an Antriebselementen 38a, 40a, 42a, 44a weisen vorzugsweise eine zumindest im Wesentlichen analoge Ausgestaltung auf, so dass insbesondere eine Beschreibung eines der Antriebselemente 38a, 40a, 42a, 44a auf die anderen übertragbar ist. Es ist jedoch auch denkbar, dass die Antriebselemente 38a, 40a, 42a, 44a zumindest teilweise voneinander verschieden ausgebildet sind. Das zumindest eine Antriebselement 38a, 40a, 42a, 44a ist als Verzahnungselement, insbesondere als Zahnrad, ausgebildet, das dazu vorgesehen ist, mit dem zumindest einen Form- und/oder Kraftschlussantriebselement 34a und/oder mit dem zumindest einen weiteren Form- und/oder Kraftschlussantriebselement 36a der Individualantriebseinheit 26a zusammenzuwirken.

Die Individualantriebseinheit 26a weist zumindest eine Kopplungseinheit 46a auf, die dazu vorgesehen ist, zumindest eines der Antriebselemente 38a, 40a, 42a, 44a der Individualantriebseinheit 26a und/oder zumindest eines der Form- und/oder Kraftschlussantriebselemente 34a, 36a der Individualantriebseinheit 26a zu einer Kopplung miteinander oder zu einer Entkopplung voneinander zu bewegen. Vorzugsweise ist die Kopplungseinheit 46a dazu vorgesehen, einen Eingriff des zumindest einen Antriebselements 38a, 40a, 42a, 44a in eines der Form- und/oder Kraftschlussantriebselemente 34a, 36a zuzuschalten oder abzuschalten. Die Kopplungseinheit 46a ist vorzugsweise dazu vorgesehen, zumindest eines der Antriebselemente 38a, 40a, 42a, 44a und/oder zumindest eines der Form- und/oder Kraftschlussantriebselemente 34a, 36a relativ zur Führungseinheit 14a zu bewegen, insbesondere entlang einer quer, insbesondere zumindest im Wesentlichen senkrecht, zur Haupttransportrichtung 50a der Stetigförderereinheit 18a. Die Kopplungseinheit 46a ist vorzugsweise dazu vorgesehen, zumindest eines der Antriebselemente 38a, 40a, 42a, 44a und zumindest eines der Form- und/oder Kraftschlussantriebselemente 34a, 36a voneinander abzuheben, insbesondere um einen individuellen Antrieb des zumindest einen Förderelements 20a und/oder des zumindest einen weiteren Förderelements 22a abzuschalten oder zu unterbinden.

Die Individualantriebseinheit 26a ist zumindest teilweise an zwei sich abgewandten Seiten des zumindest einen Förderelements 20a und/oder des zumindest einen weiteren Förderelements 22a angeordnet. Vorzugsweise ist das zumindest eine Form- und/oder Kraftschlussantriebselement 34a auf einer Seite des zumindest einen Förderelements 20a und/oder des zumindest einen weiteren Förderelements 22a angeordnet. Insbesondere ist das zumindest eine weitere Form- und/oder Kraftschlussantriebselement 36a auf einer weiteren Seite des zumindest einen Förderelements 20a und/oder des zumindest einen weiteren Förderelements 22a angeordnet.

Die Individualantriebseinheit 26a umfasst alternativ oder zusätzlich zumindest ein Magnetantriebselement 48a (in Figur 2 lediglich gestrichelt dargestellt), das zu einem Antrieb des zumindest einen Förderelements 20a, insbesondere der zumindest einen Fördergruppe 30a, und/oder des zumindest einen weiteren Förderelements 22a, insbesondere der zumindest einen weiteren Fördergruppe 32a, zumindest mit dem zumindest einen Förderelement 20a und/oder mit dem zumindest einen weiteren Förderelement 22a zusammenwirkt. Bevorzugt ist, insbesondere in einer alternativen Ausgestaltung der Individualantriebseinheit 26a, an dem zumindest einen Förderelement 20a und/oder an dem zumindest einen weiteren Förderelement 22a zumindest ein korrespondierend zum Magnetantriebselement 48a der Individualantriebseinheit 26a ausgebildetes Gegenmagnetantriebselement 84a, 86a (in Figur 2 lediglich gestrichelt dargestellt) der Individualantriebseinheit 26a angeordnet. Vorzugsweise ist die Steuer- und/oder Regeleinheit 82a der Transportvorrichtung 10a dazu vorgesehen, das Magnetantriebselement 48a und/oder das zumindest eine Gegenmagnetantriebselement 84a, 86a der Individualantriebseinheit 26a zu aktivieren oder zu deaktivieren oder einen Aktor (hier nicht näher dargestellt) anzusteuern, der dazu vorgesehen ist, das Magnetantriebselement 48a und/oder das Gegenmagnetantriebselement 84a, 86a der Individualantriebseinheit 26a in eine Aktivposition oder eine Nichtaktivposition zu bewegen.

Die Transportvorrichtung 10a umfasst zumindest eine Vakuumeinheit 28a zu einer Erzeugung eines Unterdrucks zu einer Anziehung des zumindest einen Produkts 12a in Richtung des zumindest einen Förderelements 20a und/oder des zumindest einen weiteren Förderelements 22a (vgl. Figur 2). Die Vakuumeinheit 28a umfasst vorzugsweise zumindest einen Unterdruckerzeuger, wie beispielsweise ein Vakuumgebläse o. dgl. Vorzugsweise weist der Unterdruckerzeuger eine, einem Fachmann bereits bekannte Ausgestaltung auf. Vorzugsweise ist die Vakuumeinheit 28a unterhalb der Stetigförderereinheit 18a angeordnet, insbesondere derart, dass die Stetigförderereinheit 18a über Vakuumöffnungen der Vakuumeinheit 28a hinweg bewegbar ist, oder die Vakuumeinheit 28a ist zumindest teilweise in die Stetigförderereinheit 18a, insbesondere in das zumindest eine Förderelement 20a und/oder das zumindest eine weitere Förderelement 22a, integriert.

Bei einem Verfahren zu einem Transport von zumindest einem Produkt 12a, insbesondere zu einer Bildung von Reihen und/oder Gruppen aus Produkten 12a mittels der Transportvorrichtung 10a wird in zumindest einem Verfahrensschritt das zumindest eine Förderelement 20a, insbesondere die zumindest eine Fördergruppe 30a, mittels der Individualantriebseinheit 26a mit einer Rotationsgeschwindigkeit und/oder mit einer Rotationsrichtung 56a angetrieben, die abweichend ist von einer Rotationsgeschwindigkeit und/oder von einer Rotationsrichtung 58a des zumindest einen weiteren Förderelements 22a, insbesondere der zumindest einen weiteren Fördergruppe 32a (vgl. Figur 3). In zumindest einem Verfahrensschritt werden das zumindest eine Förderelement 20a, insbesondere die zumindest eine Fördergruppe 30a, und das zumindest eine weitere Förderelement 22a, insbesondere die zumindest eine weitere Fördergruppe 32a, mittels der Individualantriebseinheit 26a mit entgegengesetzten Rotationsrichtungen 56a, 58a angetrieben. In zumindest einem Verfahrensschritt ist eine mittels der Individualantriebseinheit 26a erzeugte Rotationsbewegung des zumindest einen Förderelements 20a, insbesondere der zumindest einen Fördergruppe 30a, und des zumindest einen weiteren Förderelements 22a, insbesondere der zumindest einen weiteren Fördergruppe 32a, einer mittels der Förderantriebseinheit 24a erzeugten Antriebsbewegung der Stetigförderereinheit 18a relativ zur Führungseinheit 14a überlagert. Hinsichtlich weiterer Verfahrensschritte des Verfahrens zu einem Transport von zumindest einem Produkt 12a mittels der Transportvorrichtung 10a darf auf die vorhergehende Beschreibung der Transportvorrichtung 10a verwiesen werden, da diese Beschreibung analog auch auf das Verfahren zu lesen ist und somit alle Merkmale hinsichtlich der Transportvorrichtung 10a auch in Bezug auf das Verfahren zu einem Transport von zumindest einem Produkt 12a mittels der Transportvorrichtung 10a als offenbart gelten.

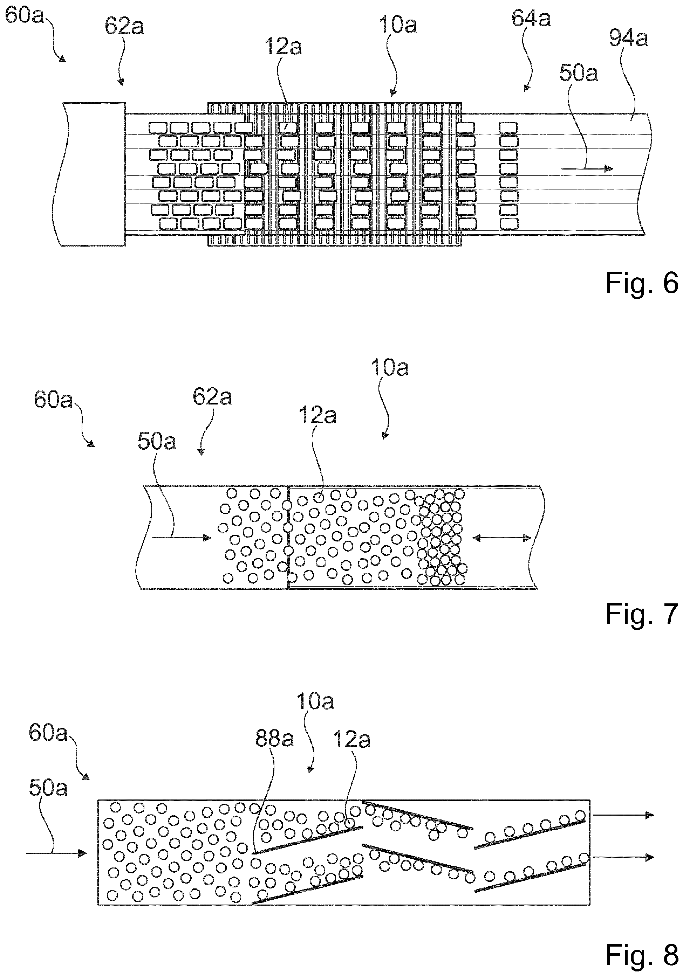

In Figur 6 ist eine mögliche Reihenbildungsfunktion aus einem lückenlosen Produktteppich von Produkten 12a mittels der Transportvorrichtung 10a dargestellt. Die Transportvorrichtung 10a kann, insbesondere zu einer Förderung von Produkten 12a mit einer polygonalen Produktform, zumindest ein Seitenführungselement 94a aufweisen. Das Seitenführungselement 94a weist bevorzugt eine Längserstreckung auf, die zumindest im Wesentlichen parallel zur Haupttransportrichtung 50a verläuft. Vorzugsweise kann die Transportvorrichtung 10a, insbesondere zu einer Förderung von Produkten 12a mit einer polygonalen Produktform, eine Vielzahl an Seitenführungselementen 94a aufweisen, die sich zumindest im Wesentlichen parallel zur Haupttransportrichtung 50a erstrecken. In zumindest einem Verfahrensschritt wird das zumindest eine Förderelement 20a, insbesondere die zumindest eine Fördergruppe 30a, mittels der Individualantriebseinheit 26a mit einer Rotationsgeschwindigkeit und/oder mit einer Rotationsrichtung 56a angetrieben, die abweichend ist von einer Rotationsgeschwindigkeit und/oder von einer Rotationsrichtung 58a des zumindest einen weiteren Förderelements 22a, insbesondere der zumindest einen weiteren Fördergruppe 32a. Insbesondere werden das zumindest eine Förderelement 20a, insbesondere die zumindest eine Fördergruppe 30a, und das zumindest eine weitere Förderelement 22a, insbesondere die zumindest eine weitere Fördergruppe 32a, mittels der Individualantriebseinheit 26a zumindest temporär gegenläufig und/oder mit unterschiedlichen Rotationsgeschwindigkeiten angetrieben, um aus einem lückenlosen Produktteppich von Produkten 12a Reihen von Produkten 12a zu bilden, insbesondere nachdem zumindest einzelne Produkte 12a infolge einer Beschleunigung durch eine Transportbewegung der Stetigförderereinheit 18a sich aus dem lückenlosen Produktteppich gelöst haben.

Figur 7 zeigt eine mögliche Inline-Buffer-Funktion aus einem ungeordneten Produktteppich aus Produkten 12a mittels der Transportvorrichtung 10a. In zumindest einem Verfahrensschritt wird das zumindest eine Förderelement 20a, insbesondere die zumindest eine Fördergruppe 30a, mittels der Individualantriebseinheit 26a mit einer Rotationsgeschwindigkeit und/oder mit einer Rotationsrichtung 56a angetrieben, die abweichend ist von einer Rotationsgeschwindigkeit und/oder von einer Rotationsrichtung 58a des zumindest einen weiteren Förderelements 22a, insbesondere der zumindest einen weiteren Fördergruppe 32a. Insbesondere werden das zumindest eine Förderelement 20a, insbesondere die zumindest eine Fördergruppe 30a, und das zumindest eine weitere Förderelement 22a, insbesondere die zumindest eine weitere Fördergruppe 32a, mittels der Individualantriebseinheit 26a zumindest partiell mit unterschiedlichen Rotationsgeschwindigkeiten angetrieben.

Figur 8 zeigt eine mögliche Inline-Laning-Funktion aus einem ungeordneten Produktteppich von Produkten 12a mittels der Transportvorrichtung 10a. Die Transportvorrichtung 10a umfasst zumindest ein Führungsleitelement 88a, insbesondere eine Vielzahl an Führungsleitelementen 88a, die an der Stetigförderereinheit 18a angeordnet sind. In zumindest einem Verfahrensschritt wird das zumindest eine Förderelement 20a, insbesondere die zumindest eine Fördergruppe 30a, mittels der Individualantriebseinheit 26a mit einer Rotationsgeschwindigkeit und/oder mit einer Rotationsrichtung 56a angetrieben, die abweichend ist von einer Rotationsgeschwindigkeit und/oder von einer Rotationsrichtung 58a des zumindest einen weiteren Förderelements 22a, insbesondere der zumindest einen weiteren Fördergruppe 32a. Insbesondere werden die Förderelemente 20a, 22a, insbesondere die Fördergruppen 30a, 32a, mittels der Individualantriebseinheit 26a entlang der Haupttransportrichtung 50a mit steigenden Rotationsgeschwindigkeiten angetrieben.

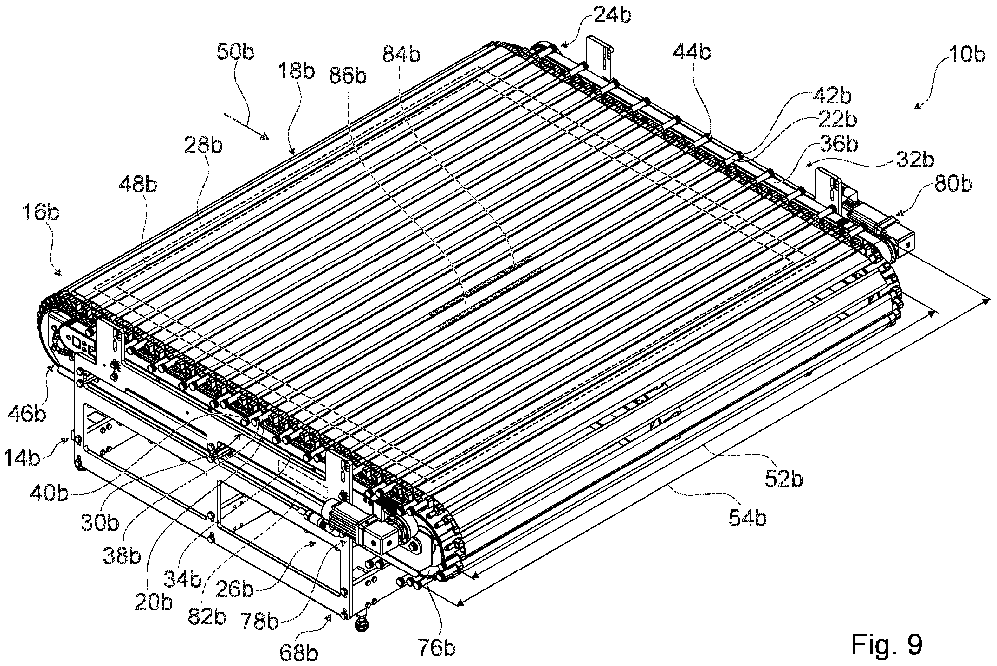

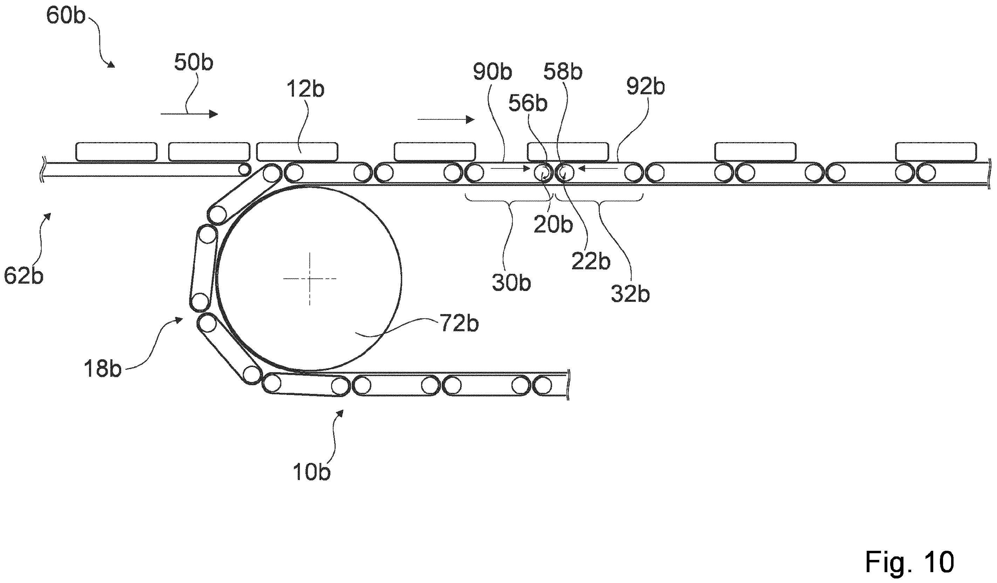

In den Figuren 9 und 10 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In den Ausführungsbeispielen der Figuren 9 und 10 ist der Buchstabe a durch den Buchstaben b ersetzt.

Figur 9 zeigt eine Detailansicht einer alternativen Transportvorrichtung 10b zu einem Transport von zumindest einem Produkt 12b (vgl. Figur 10), insbesondere zu einer Bildung von Reihen und/oder Gruppen aus Produkten 12b. Die alternative Transportvorrichtung 10b umfasst zumindest eine Führungseinheit 14b, zumindest eine Fördereinheit 16b, die zumindest eine relativ zur Führungseinheit 14b beweglich gelagerte Stetigförderereinheit 18b, insbesondere ein endloses Fördertransportband, aufweist. Die Stetigförderereinheit 18b umfasst zumindest ein beweglich gelagertes Förderelement 20b, insbesondere eine Förderrolle, und zumindest ein weiteres beweglich gelagertes Förderelement 22b, insbesondere eine weitere Förderrolle, die zur Bildung der Stetigförderereinheit 18b miteinander verbunden sind und zumindest gemeinsam relativ zur Führungseinheit 14b bewegbar sind. Die Transportvorrichtung 10b umfasst ferner zumindest eine Förderantriebseinheit 24b zu einem Antrieb der Stetigförderereinheit 18b relativ zur Führungseinheit 14b, insbesondere zu einem umlaufenden Antrieb der Stetigförderereinheit 18b um die Führungseinheit 14b. Des Weiteren umfasst die Transportvorrichtung 10b zumindest eine Individualantriebseinheit 26b, die zumindest dazu vorgesehen ist, zumindest das zumindest eine Förderelement 20b und/oder das zumindest eine weitere Förderelement 22b individuell anzutreiben, insbesondere zusätzlich zu einem Antrieb der Stetigförderereinheit 18b relativ zur Führungseinheit 14b mittels der Förderantriebseinheit 24b.

Im Unterschied zu der in den Figuren 1 bis 8 dargestellten Transportvorrichtung 10a weist die in den Figuren 9 und 10 dargestellte Stetigförderereinheit 18b der Transportvorrichtung 10b eine Vielzahl an endlosen Förderbandsegmenten 90b, 92b auf, die, insbesondere kettenartig, miteinander verbunden sind. Die Förderbandsegmente 90b, 92b sind vorzugsweise selbst als endlose Förderbänder oder als Rundriemen ausgebildet, die mittels des zumindest einen Förderelements 20b und/oder des zumindest einen weiteren Förderelements 22b, insbesondere zusätzlich zu einem Umlaufantrieb der Stetigförderereinheit 18b, umlaufend antreibbar sind. Das zumindest eine Förderelement 20b und/oder das zumindest eine weitere Förderelement 22b sind/ist als Antriebsrolle/n jeweils eines der Förderbandsegmente 90b, 92b der Stetigförderereinheit 18b ausgebildet. Vorzugsweise ist die Individualantriebseinheit 26b dazu vorgesehen, infolge eines individuellen Antriebs des zumindest einen Förderelements 20b und/oder des zumindest einen weiteren Förderelements 22b das/die Förderbandsegment/e 90b, 92b individuell, insbesondere zusätzlich zu einem Umlaufantrieb der Stetigförderereinheit 18b, die durch die Förderbandsegmente 90b, 92b gebildet ist, anzutreiben. Hinsichtlich weiterer Merkmale und Funktionen der in den Figuren 9 und 10 dargestellten Transportvorrichtung 10b darf auf die Beschreibung der in den Figuren 1 bis 8 dargestellten Transportvorrichtung 10a verwiesen werden, die zumindest im Wesentlichen analog auf die den Figuren 9 und 10 dargestellten Transportvorrichtung 10b anzuwenden ist.

## Patentansprüche

1. Transportvorrichtung zu einem Transport von Produkten (12a; 12b) zu einer Bildung von Reihen und/oder Gruppen aus den Produkten (12a; 12b), mit zumindest einer Führungseinheit (14a; 14b), mit zumindest einer Fördereinheit (16a; 16b), die zumindest eine relativ zur Führungseinheit (14a; 14b) beweglich gelagerte Stetigförderereinheit (18a; 18b) aufweist, die als ein endloses Förderrollentransportband ausgebildet ist, wobei die Stetigförderereinheit (18a; 18b) zumindest ein als Förderrolle ausgebildetes, beweglich gelagertes Förderelement (20a; 20b) und zumindest ein weiteres als weitere Förderrolle ausgebildetes, beweglich gelagertes Förderelement (22a; 22b) umfasst, die zur Bildung der Stetigförderereinheit (18a; 18b) miteinander verbunden sind und zumindest gemeinsam relativ zur Führungseinheit (14a; 14b) bewegbar sind, und mit zumindest einer Förderantriebseinheit (24a; 24b) zu einem Antrieb der Stetigförderereinheit (18a; 18b) relativ zur Führungseinheit (14a; 14b) zu einem umlaufenden Antrieb der Stetigförderereinheit (18a; 18b) um die Führungseinheit (14a; 14b) und mit zumindest einer Individualantriebseinheit (26a; 26b), die zumindest dazu vorgesehen ist, zumindest das zumindest eine Förderelement (20a; 20b) und/oder das zumindest eine weitere Förderelement (22a; 22b) zusätzlich zu einem Antrieb der Stetigförderereinheit (18a; 18b) relativ zur Führungseinheit (14a; 14b) individuell anzutreiben, wobei das zumindest eine Förderelement (20a; 20b) einer Fördergruppe (30a; 30b) der Stetigförderereinheit (18a; 18b) zugeordnet ist und das zumindest eine weitere Förderelement (22a; 22b) einer weiteren Fördergruppe (32a; 32b) der Stetigförderereinheit (18a; 18b) zugeordnet ist, wobei die Individualantriebseinheit (26a; 26b) zumindest dazu vorgesehen ist, die Fördergruppe (30a; 30b) und/oder die weitere Fördergruppe (32a; 32b) individuell anzutreiben, wobei die Individualantriebseinheit (26a; 26b) zumindest ein Form- und/oder Kraftschlussantriebselement (34a, 36a; 34b, 36b) aufweist, das zu einem Antrieb des zumindest einen Förderelements (20a; 20b) und/oder des zumindest einen weiteren Förderelements (22a; 22b) mit dem zumindest einen Förderelement (20a; 20b) und/oder mit dem zumindest einen weiteren Förderelement (22a; 22b) zusammenwirkt, **dadurch gekennzeichnet, dass** das Form- und/oder Kraftschlussantriebselement (34a, 36a; 34b, 36b) als Zahnriemen ausgebildet ist, der entlang einer Gesamterstreckung des Zahnriemens ungleichmäßig verteilt angeordnete Zähne aufweist.

2. Transportvorrichtung nach Anspruch 1, **dadurch gekennzeichnet, dass** die Individualantriebseinheit (26a; 26b) zumindest ein Antriebselement (38a, 40a, 42a, 44a; 38b, 40b, 42b, 44b) aufweist, das an dem zumindest einen Förderelement (20a; 20b) oder an dem zumindest einen weiteren Förderelement (22a; 22b) angeordnet ist.

3. Transportvorrichtung nach Anspruch 2, **dadurch gekennzeichnet, dass** das zumindest eine Antriebselement (38a, 40a, 42a, 44a; 38b, 40b, 42b, 44b) als Verzahnungselement, insbesondere als Zahnrad, ausgebildet ist, das dazu vorgesehen ist, mit einem Form- und/oder Kraftschlussantriebselement (34a, 36a; 34b, 36b) der Individualantriebseinheit (26a; 26b) zusammenzuwirken.

4. Transportvorrichtung nach einem der vorhergehenden Ansprüche,
**dadurch gekennzeichnet, dass** die Individualantriebseinheit (26a; 26b) zumindest eine Kopplungseinheit (46a; 46b) aufweist, die dazu vorgesehen ist, zumindest ein Antriebselement (38a, 40a, 42a, 44a; 38b, 40b, 42b, 44b) der Individualantriebseinheit (26a; 26b) und/oder ein Form- und/oder Kraftschlussantriebselement (34a, 36a; 34b, 36b) der Individualantriebseinheit (26a; 26b) zu einer Kopplung miteinander oder zu einer Entkopplung voneinander zu bewegen.

5. Transportvorrichtung nach einem der vorhergehenden Ansprüche,
**dadurch gekennzeichnet, dass** die Individualantriebseinheit (26a; 26b) zumindest teilweise an zwei sich abgewandten Seiten des zumindest einen Förderelements (20a; 20b) und/oder des zumindest einen weiteren Förderelements (22a; 22b) angeordnet ist.

6. Transportvorrichtung zumindest nach Anspruch 1 oder 2, **dadurch gekennzeichnet, dass** die Individualantriebseinheit (26a; 26b) zumindest ein Magnetantriebselement (48a; 48b) aufweist, das zu einem Antrieb des zumindest einen Förderelements (20a; 20b) und/oder des zumindest einen weiteren Förderelements (22a; 22b) mit dem zumindest einen Förderelement (20a; 20b) und/oder mit dem zumindest einen weiteren Förderelement (22a; 22b) zusammenwirkt.

7. Transportvorrichtung nach einem der vorhergehenden Ansprüche, **gekennzeichnet durch** zumindest eine Vakuumeinheit (28a; 28b) zu einer Erzeugung eines Unterdrucks zu einer Anziehung des zumindest einen Produkts (12a; 12b) in Richtung des zumindest einen Förderelements (20a; 20b) und/oder des zumindest einen weiteren Förderelements (22a; 22b).

8. Verfahren zu einem Transport von Produkten (12a; 12b) zu einer Bildung von Reihen und/oder Gruppen aus den Produkten (12a; 12b) mittels einer Transportvorrichtung nach einem der vorhergehenden Ansprüche, wobei in zumindest einem Verfahrensschritt das zumindest eine Förderelement (20a; 20b) mittels der Individualantriebseinheit (26a; 26b) mit einer Rotationsgeschwindigkeit und/oder mit einer Rotationsrichtung (56a, 58a; 56b, 58b) angetrieben wird, die abweichend ist von einer Rotationsgeschwindigkeit und/oder von einer Rotationsrichtung (56a, 58a; 56b, 58b) des zumindest einen weiteren Förderelements (22a; 22b).

9. Verfahren nach Anspruch 8, **dadurch gekennzeichnet, dass** in zumindest einem Verfahrensschritt das zumindest eine Förderelement (20a; 20b) und das zumindest eine weitere Förderelement (22a; 22b) mittels der Individualantriebseinheit (26a; 26b) mit entgegengesetzten Rotationsrichtungen (56a, 58a; 56b, 58b) angetrieben werden.

10. Verfahren nach Anspruch 8 oder 9, **dadurch gekennzeichnet, dass** in zumindest einem Verfahrensschritt eine mittels der Individualantriebseinheit (26a; 26b) erzeugte Rotationsbewegung des zumindest einen Förderelements (20a; 20b) und des zumindest einen weiteren Förderelements (22a; 22b) einer mittels einer Förderantriebseinheit (24a; 24b) erzeugten Antriebsbewegung der Stetigförderereinheit (18a; 18b) relativ zur Führungseinheit (14a; 14b) überlagert ist.

## Claims

1. Transport device for transporting products (12a; 12b) to form rows and/or groups of the products (12a; 12b), comprising at least one guide unit (14a; 14b), comprising at least one conveyor unit (16a; 16b) which has at least one continuous conveyor unit (18a; 18b) which is movably mounted relative to the guide unit (14a; 14b) and is designed as an endless conveyor roller transport belt, the continuous conveyor unit (18a; 18b) comprising at least one movably mounted conveyor element (20a; 20b) designed as a conveyor roller and at least one further movably mounted conveyor element (22a; 22b) designed as a further conveyor roller, which conveyor elements are connected to one another to form the continuous conveyor unit (18a; 18b) and are at least jointly movable relative to the guide unit (14a; 14b), and comprising at least one conveyor drive unit (24a; 24b) for driving the continuous conveyor unit (18a; 18b) relative to the guide unit (14a; 14b) to drive the continuous conveyor unit (18a; 18b) in rotation around the guide unit (14a; 14b), and comprising at least one individual drive unit (26a; 26b) which is at least provided to individually drive at least the at least one conveyor element (20a; 20b) and/or the at least one further conveyor element (22a; 22b) in addition to driving the continuous conveyor unit (18a; 18b) relative to the guide unit (14a; 14b), the at least one conveyor element (20a; 20b) being assigned to a conveyor group (30a; 30b) of the continuous conveyor unit (18a; 18b), and the at least one further conveyor element (22a; 22b) being assigned to a further conveyor group (32a; 32b) of the continuous conveyor unit (18a; 18b), the individual drive unit (26a; 26b) being at least provided to individually drive the conveyor group (30a; 30b) and/or the further conveyor group (32a; 32b), the individual drive unit (26a; 26b) having at least one form-fit and/or force-fit drive element (34a, 36a; 34b, 36b) which interacts with the at least one conveyor element (20a; 20b) and/or with the at least one further conveyor element (22a; 22b) to drive the at least one conveyor element (20a; 20b) and/or the at least one further conveyor element (22a; 22b),**characterized in that** the form-fit and/or force-fit drive element (34a, 36a; 34b, 36b) is designed as a toothed belt which has teeth distributed non-uniformly along a total extent of the toothed belt.

2. Transport device according to claim 1, **characterized in that** the individual drive unit (26a; 26b) has at least one drive element (38a, 40a, 42a, 44a; 38b, 40b, 42b, 44b) which is arranged on the at least one conveyor element (20a; 20b) or on the at least one further conveyor element (22a; 22b).

3. Transport device according to claim 2, **characterized in that** the at least one drive element (38a, 40a, 42a, 44a; 38b, 40b, 42b, 44b) is designed as a toothed element, in particular as a toothed wheel, which is provided to interact with a form-fit and/or force-fit drive element (34a, 36a; 34b, 36b) of the individual drive unit (26a; 26b).

4. Transport device according to any of the preceding claims,
**characterized in that** the individual drive unit (26a; 26b) has at least one coupling unit (46a; 46b) which is provided to move at least one drive element (38a, 40a, 42a, 44a; 38b, 40b, 42b, 44b) of the individual drive unit (26a; 26b) and/or a form-fit and/or force-fit drive element (34a, 36a; 34b, 36b) of the individual drive unit (26a; 26b) in order to couple them to one another or to decouple them from one another.

5. Transport device according to any of the preceding claims,
**characterized in that** the individual drive unit (26a; 26b) is arranged at least partially on two opposite sides of the at least one conveyor element (20a; 20b) and/or the at least one further conveyor element (22a; 22b).

6. Transport device at least according to either claim 1 or claim 2,
**characterized in that** the individual drive unit (26a; 26b) has at least one magnetic drive element (48a; 48b) which interacts with the at least one conveyor element (20a; 20b) and/or with the at least one further conveyor element (22a; 22b) in order to drive the at least one conveyor element (20a; 20b) and/or the at least one further conveyor element (22a; 22b).

7. Transport device according to any of the preceding claims, **characterized by** at least one vacuum unit (28a; 28b) for generating a negative pressure in order to draw the at least one product (12a; 12b) in the direction of the at least one conveyor element (20a; 20b) and/or the at least one further conveyor element (22a; 22b).

8. Method for transporting products (12a; 12b) to form rows and/or groups of the products (12a; 12b) by means of a transport device according to any of the preceding claims, wherein, in at least one method step, the at least one conveyor element (20a; 20b) is driven by means of the individual drive unit (26a; 26b) at a rotational speed and/or in a rotational direction (56a, 58a; 56b, 58b) which differs from a rotational speed and/or from a rotational direction (56a, 58a; 56b, 58b) of the at least one further conveyor element (22a; 22b).

9. Method according to claim 8, **characterized in that,** in at least one method step, the at least one conveyor element (20a; 20b) and the at least one further conveyor element (22a; 22b) are driven by means of the individual drive unit (26a; 26b) in opposing rotational directions (56a, 58a; 56b, 58b).

10. Method according to either claim 8 or claim 9, **characterized in that,** in at least one method step, a rotational movement of the at least one conveyor element (20a; 20b) and of the at least one further conveyor element (22a; 22b), which is generated by means of the individual drive unit (26a; 26b), is superimposed on a drive movement of the continuous conveyor unit (18a; 18b) relative to the guide unit (14a; 14b), which is generated by means of a conveyor drive unit (24a; 24b).

## Revendications

1. Dispositif de transport pour un transport de produits (12a ; 12b) en vue d'une formation de rangées et/ou de groupes à partir des produits (12a ; 12b), comportant au moins une unité de guidage (14a ; 14b), comportant au moins une unité d'acheminement (16a ; 16b) qui présente au moins une unité d'acheminement continu (18a ; 18b) montée de manière mobile par rapport à l'unité de guidage (14a ; 14b) et conçue comme une bande transporteuse à rouleaux sans fin, dans lequel l'unité d'acheminement continu (18a ; 18b) comprend au moins un élément d'acheminement (20a ; 20b) conçu comme un rouleau d'acheminement et monté de manière mobile et au moins un autre élément d'acheminement (22a ; 22b) conçu comme un autre rouleau d'acheminement et monté de manière mobile, lesquels éléments d'acheminement sont reliés entre eux pour former l'unité d'acheminement continu (18a ; 18b) et peuvent être déplacés au moins ensemble par rapport à l'unité de guidage (14a ; 14b), et comportant au moins une unité d'entraînement d'acheminement (24a ; 24b) pour un entraînement de l'unité d'acheminement continu (18a ; 18b) par rapport à l'unité de guidage (14a ; 14b) pour un entraînement rotatif de l'unité d'acheminement continu (18a ; 18b) autour de l'unité de guidage (14a ; 14b) et comportant au moins une unité d'entraînement individuel (26a ; 26b) qui est prévue au moins pour entraîner individuellement au moins l'au moins un élément d'acheminement (20a ; 20b) et/ou l'au moins un autre élément d'acheminement (22a ; 22b) en plus d'un entraînement de l'unité d'acheminement continu (18a ; 18b) par rapport à l'unité de guidage (14a ; 14b), dans lequel l'au moins un élément d'acheminement (20a ; 20b) est associé à un groupe d'acheminement (30a ; 30b) de l'unité d'acheminement continu (18a ; 18b) et l'au moins un autre élément d'acheminement (22a ; 22b) est associé à un autre groupe d'acheminement (32a ; 32b) de l'unité d'acheminement continu (18a ; 18b), dans lequel l'unité d'entraînement individuel (26a ; 26b) est prévue au moins pour entraîner individuellement le groupe d'acheminement (30a ; 30b) et/ou l'autre groupe d'acheminement (32a ; 32b), dans lequel l'unité d'entraînement individuel (26a ; 26b) présente au moins un élément d'entraînement par complémentarité de forme et/ou à force (34a, 36a ; 34b, 36b) qui coopère avec l'au moins un élément d'acheminement (20a ; 20b) et/ou avec l'au moins un autre élément d'acheminement (22a ; 22b) pour un entraînement de l'au moins un élément d'acheminement (20a ; 20b) et/ou de l'au moins un autre élément d'acheminement (22a ; 22b), **caractérisé en ce que** l'élément d'entraînement par complémentarité de forme et/ou à force (34a, 36a ; 34b, 36b) est conçu sous la forme d'une courroie dentée qui présente des dents disposées de manière à être réparties de manière non uniforme le long d'une extension totale de la courroie dentée.

2. Dispositif de transport selon la revendication 1, **caractérisé en ce que** l'unité d'entraînement individuel (26a ; 26b) présente au moins un élément d'entraînement (38a, 40a, 42a, 44a ; 38b, 40b, 42b, 44b) qui est disposé sur l'au moins un élément d'acheminement (20a ; 20b) ou sur l'au moins un autre élément d'acheminement (22a ; 22b).

3. Dispositif de transport selon la revendication 2, **caractérisé en ce que** l'au moins un élément d'entraînement (38a, 40a, 42a, 44a ; 38b, 40b, 42b, 44b) est réalisé sous la forme d'un élément à denture, en particulier d'une roue dentée, qui est prévu pour coopérer avec un élément d'entraînement par complémentarité de forme et/ou à force (34a, 36a ; 34b, 36b) de l'unité d'entraînement individuel (26a ; 26b).

4. Dispositif de transport selon l'une des revendications précédentes,
**caractérisé en ce que** l'unité d'entraînement individuel (26a ; 26b) présente au moins une unité d'accouplement (46a ; 46b) qui est prévue pour déplacer au moins un élément d'entraînement (38a, 40a, 42a, 44a ; 38b, 40b, 42b, 44b) de l'unité d'entraînement individuel (26a ; 26b) et/ou un élément d'entraînement par complémentarité de forme et/ou à force (34a, 36a ; 34b, 36b) de l'unité d'entraînement individuel (26a ; 26b) pour les accoupler l'un à l'autre ou pour les désolidariser l'un de l'autre.

5. Dispositif de transport selon l'une des revendications précédentes,
**caractérisé en ce que** l'unité d'entraînement individuel (26a ; 26b) est disposée au moins partiellement sur deux côtés opposés de l'au moins un élément d'acheminement (20a ; 20b) et/ou de l'au moins un autre élément d'acheminement (22a ; 22b).

6. Dispositif de transport au moins selon la revendication 1 ou 2,
**caractérisé en ce que** l'unité d'entraînement individuel (26a ; 26b) présente au moins un élément d'entraînement magnétique (48a ; 48b) qui coopère avec l'au moins un élément d'acheminement (20a ; 20b) et/ou avec l'au moins un autre élément d'acheminement (22a ; 22b) pour un entraînement de l'au moins un élément d'acheminement (20a ; 20b) et/ou de l'au moins un autre élément d'acheminement (22a ; 22b).

7. Dispositif de transport selon l'une des revendications précédentes,
**caractérisé par** au moins une unité à vide (28a ; 28b) pour une génération d'une dépression pour attirer l'au moins un produit (12a ; 12b) en direction de l'au moins un élément d'acheminement (20a ; 20b) et/ou de l'au moins un autre élément d'acheminement (22a ; 22b).

8. Procédé pour un transport de produits (12a ; 12b) en vue d'une formation de rangées et/ou de groupes à partir des produits (12a ; 12b) au moyen d'un dispositif de transport selon l'une des revendications précédentes, dans lequel, dans au moins une étape de procédé, l'au moins un élément d'acheminement (20a ; 20b) est entraîné au moyen de l'unité d'entraînement individuel (26a ; 26b) à une vitesse de rotation et/ou avec un sens de rotation (56a, 58a ; 56b, 58b) qui sont différents d'une vitesse de rotation et/ou d'un sens de rotation (56a, 58a ; 56b, 58b) de l'au moins un autre élément d'acheminement (22a ; 22b).

9. Procédé selon la revendication 8, **caractérisé en ce que,** dans au moins une étape de procédé, l'au moins un élément d'acheminement (20a ; 20b) et l'au moins un autre élément d'acheminement (22a ; 22b) sont entraînés avec des sens de rotation (56a, 58a ; 56b, 58b) opposés au moyen de l'unité d'entraînement individuel (26a ; 26b).

10. Procédé selon la revendication 8 ou 9, **caractérisé en ce que,** dans au moins une étape de procédé, un mouvement de rotation de l'au moins un élément d'acheminement (20a ; 20b) et de l'au moins un autre élément d'acheminement (22a ; 22b), lequel mouvement de rotation est généré au moyen de l'unité d'entraînement individuel (26a ; 26b), est superposé à un mouvement d'entraînement de l'unité d'acheminement en continu (18a ; 18b) par rapport à l'unité de guidage (14a ; 14b), lequel mouvement d'entraînement est généré au moyen d'une unité d'entraînement d'acheminement (24a ; 24b).
